(19) Europäisches Patentamt
European Patent Office
Office européen des brevets

(11) **EP 4 637 077 A1**

(12) **EUROPEAN PATENT APPLICATION**
published in accordance with Art. 153(4) EPC

(43) Date of publication:
**22.10.2025   Bulletin 2025/43**

(21) Application number: **22968182.0**

(22) Date of filing: **15.12.2022**

(51) International Patent Classification (IPC):
**H04L 9/32** *(2006.01)*

(52) Cooperative Patent Classification (CPC):
**H04L 9/32**

(86) International application number:
**PCT/CN2022/139250**

(87) International publication number:
**WO 2024/124473 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• **ZHONG, Steven Yin
Shenzhen, Guangdong 518129 (CN)**

• **WEI, Zhuo
Shenzhen, Guangdong 518129 (CN)**
• **XIE, Yujuan
Shenzhen, Guangdong 518129 (CN)**
• **ZHANG, Li
Shenzhen, Guangdong 518129 (CN)**
• **LIEW, Lin Shen
Shenzhen, Guangdong 518129 (CN)**

(74) Representative: **Gill Jennings & Every LLP
The Broadgate Tower
20 Primrose Street
London EC2A 2ES (GB)**

(54) **AUTHENTICATION METHOD, APPARATUS, COMPUTER-READABLE STORAGE MEDIUM,
AND PROGRAM PRODUCT**

(57) An authentication method and apparatus, a computer-readable storage medium, and a program product are provided, are applicable to the field of security authentication technologies, and may be used for authentication of a security level of a vehicle. The authentication method includes: determining a system architecture to which a to-be-authenticated device belongs; obtaining a to-be-authenticated service corresponding to the system architecture; and authenticating the to-be-authenticated service of the to-be-authenticated device, to obtain an authentication result of the to-be-authenticated device. An association relationship between a system architecture and a to-be-authenticated service is abstracted, so that different to-be-authenticated devices belonging to a same system architecture can have a same to-be-authenticated service. In this way, the to-be-authenticated devices belonging to the same system architecture can have a same measurement criterion. This helps measure security levels of different to-be-authenticated devices in a unified manner, and improve reliability of an authentication result.

FIG. 2

**Description**

TECHNICAL FIELD

This application relates to the field of security authentication technologies, and provides an authentication method and apparatus, a computer-readable storage medium, and a program product.

BACKGROUND

In recent years, automotive cybersecurity attacks frequently occur. It is understood that in 2021 alone, up to 256 automotive cybersecurity attacks were publicly reported worldwide, and have increased by 225% compared with those in 2018. In the face of the rapid development of intelligent vehicles, automotive cybersecurity should also be given attention.
To resolve the foregoing problem, some solutions are proposed in the industry. However, in some of these solutions, authentication is performed only on an automobile part or a procedure in a vehicle manufacturing process, and authentication cannot be performed on an entire vehicle. In some of these solutions, although authentication can be performed on the entire vehicle, different authentication means are used for different vehicles. Consequently, different vehicles have different measurement standards, and it is difficult to measure security levels of different vehicles in a unified manner.
It can be learned that currently, there is no general authentication method for electronic devices (for example, vehicles), and security levels of different electronic devices cannot be measured in a unified manner.

SUMMARY

This application provides an authentication method and apparatus, a computer-readable storage medium, and a program product, to measure security levels of electronic devices in a unified manner.
According to a first aspect, this application provides an authentication method. The method is applicable to an authentication apparatus. The authentication apparatus may be any device having a processing capability, for example, an authentication server or an authentication server cluster including a plurality of authentication servers. The method includes: An authentication apparatus determines a system architecture to which a to-be-authenticated device belongs; obtains a to-be-authenticated service corresponding to the system architecture; and authenticates the to-be-authenticated service of the to-be-authenticated device, to obtain an authentication result of the to-be-authenticated device.
In the foregoing design, an association relationship between a system architecture and a to-be-authenticated service is abstracted, and the to-be-authenticated service is selected for the to-be-authenticated device based on the association relationship, so that different to-be-authenticated devices belonging to a same system architecture can have a same to-be-authenticated service, that is, the to-be-authenticated devices belonging to a same system architecture have a same measurement criterion. In this case, service authentication of different to-be-authenticated devices is comparable, and an authentication result determined based on this is more reliable. This resolves a problem that it is difficult to perform unified authentication on different to-be-authenticated devices due to different architectures, functions, and components.
In a possible design, the to-be-authenticated device is a vehicle; and the system architecture to which the to-be-authenticated device belongs is one of the following architectures: a distributed electrical/electronic architecture; a cross-domain integrated electrical/electronic architecture; or a central integrated electrical/electronic architecture.
In the foregoing design, the distributed electrical/electronic architecture is a conventional in-vehicle architecture, the cross-domain integrated electrical/electronic architecture is a currently commonly used in-vehicle architecture, and the central integrated electrical/electronic architecture is an ideal in-vehicle architecture in the future. It can be learned that, in this design, a plurality of possible in-vehicle architectures in the field of vehicle-to-everything are abstracted based on a time span, and a mapping between each possible in-vehicle architecture and a to-be-authenticated service is constructed. In this way, the authentication method is applicable to most vehicle models in the field of the vehicle-to-everything. This helps improve universality of the authentication method.
In a possible design, the authentication apparatus may perform authentication on the to-be-authenticated service of the to-be-authenticated device in the following manners, to obtain the authentication result of the to-be-authenticated device: If the system architecture corresponds to one to-be-authenticated service, the authentication apparatus may directly authenticate the to-be-authenticated service in the to-be-authenticated device, to obtain an authentication level corresponding to the to-be-authenticated service, and determine the authentication level corresponding to the to-be-authenticated service as the authentication result of the to-be-authenticated device; or if the system architecture corresponds to a plurality of to-be-authenticated services, the authentication apparatus may separately authenticate the plurality of to-be-authenticated services in the to-be-authenticated device, to obtain authentication levels respectively corresponding to the plurality of to-be-authenticated services, and obtain the authentication result of the to-be-authenticated device based on the plurality of authentication levels corresponding to the plurality of to-be-authenticated services.

In the foregoing design, two possible cases in which the to-be-authenticated device has only one to-be-authenticated service and has a plurality of to-be-authenticated services are considered, and a corresponding authentication procedure is set for each of the two possible cases. In this way, the authentication result of the to-be-authenticated device can match an actual situation of the to-be-authenticated device.

In a possible design, when the system architecture corresponds to the plurality of to-be-authenticated services, the authentication result of the to-be-authenticated device may be presented as at least one of the following: a table of a correspondence between the plurality of to-be-authenticated services and the plurality of authentication levels; a diagram of a correspondence between the plurality of to-be-authenticated services and the plurality of authentication levels; or a weighted average value of the plurality of authentication levels corresponding to the plurality of to-be-authenticated services.

In the foregoing design, when the authentication result is presented as the table of the correspondence or the diagram of the correspondence between the plurality of to-be-authenticated services and the plurality of authentication levels, a user may learn of security levels of the to-be-authenticated device from different angles by viewing the authentication result. When the authentication result of the to-be-authenticated device is presented as the weighted average value, the user can intuitively and clearly view an overall security level of the to-be-authenticated device.

In a possible design, that the authentication apparatus authenticates the to-be-authenticated service of the to-be-authenticated device, to obtain an authentication result of the to-be-authenticated device includes: The authentication apparatus obtains a mapping relationship between an authentication level corresponding to the to-be-authenticated service and a to-be-authenticated item, where in the mapping relationship, each authentication level corresponds to at least one to-be-authenticated item, and a to-be-authenticated item corresponding to any authentication level includes all to-be-authenticated items corresponding to a previous authentication level; and the authentication apparatus authenticates each authentication level in the mapping relationship in the to-be-authenticated device, and determines, as the authentication level corresponding to the to-be-authenticated service in the to-be-authenticated device, a highest authentication level in all authentication levels that are successfully authenticated. When any authentication level is authenticated, if all to-be-authenticated items corresponding to the authentication level are successfully authenticated in the to-be-authenticated device, it is determined that the authentication level is successfully authenticated in the to-be-authenticated device.

In the foregoing design, the mapping relationship between the authentication level and the to-be-authenticated item is pre-configured for the to-be-authenticated service, so that when the to-be-authenticated service needs to be authenticated, the mapping relationship can be directly invoked to start an authentication procedure, and the to-be-authenticated service does not need to be analyzed again. In this way, authentication time can be greatly reduced, and authentication efficiency is improved. In addition, a higher authentication level is configured to include all to-be-authenticated items included in a lower authentication level, so that the higher authentication level includes more to-be-authenticated items, that is, more authentication needs to be performed. In this way, reliability of the higher authentication level that is successfully authenticated is higher, and an authentication result is more proper.

In a possible design, that the authentication apparatus authenticates each authentication level in the mapping relationship in the to-be-authenticated device, and determines, as the authentication level corresponding to the to-be-authenticated service in the to-be-authenticated device, a highest authentication level in all authentication levels that are successfully authenticated includes: The authentication apparatus authenticates each authentication level in the mapping relationship in the to-be-authenticated device in ascending order of authentication levels, where when any authentication level is authenticated, if all to-be-authenticated items corresponding to the authentication level are successfully authenticated in the to-be-authenticated device, a next authentication level is authenticated; otherwise, a previous authentication level is determined as the authentication level corresponding to the to-be-authenticated service in the to-be-authenticated device.

In the foregoing design, once determining that one to-be-authenticated item fails to be authenticated, authentication can be directly ended, and there is no need to authenticate another to-be-authenticated item that is not authenticated. In this way, authentication resources can be saved while an authentication result can be determined more quickly.

In a possible design, the authentication apparatus may determine the mapping relationship in the following manner: The authentication apparatus first determines each risk in the to-be-authenticated service and a risk level of the risk based on service logic of the to-be-authenticated service; then for each risk, defines one to-be-authenticated item, and determines a security level corresponding to the to-be-authenticated item based on the risk level of the risk, where the to-be-authenticated item indicates to overcome the corresponding risk; and finally, defines each authentication level based on a level range including security levels of all to-be-authenticated items, and establishes a mapping relationship between any authentication level and to-be-authenticated items corresponding to all security levels that are not higher than the authentication level.

In the foregoing design, a mapping relationship between a to-be-authenticated item and an authentication level is abstracted with reference to a risk that may exist in the service logic of the to-be-authenticated service. In this way, successful authentication can mean that the risk in the service logic of the to-be-authenticated service can be overcome, and the to-be-authenticated service is secure in an execution process. It can be learned that this mapping construction manner can better adapt to a real service scenario, and a subsequent authentication result can be more reliable.

In a possible design, the security level is negatively correlated with the risk level. In other words, a higher risk level indicates a lower security level. This means that a risk that has a more serious consequence and is more likely to occur is first resolved. In this way, the security level and the risk level are more properly configured.

In a possible design, the to-be-authenticated items in the mapping relationship are grouped into M groups based on a service feature. In this case, before authenticating each authentication level in the mapping relationship in the to-be-authenticated device, the authentication apparatus may further first determine, based on a service feature of the to-be-authenticated service executed by the to-be-authenticated device, one or more groups that are in the M groups and that are not involved, and invalidate a to-be-authenticated item included in the one or more groups that are in the mapping relationship and that are not involved.

In the foregoing design, the to-be-authenticated items in the mapping relationship are first screened based on a service feature of the to-be-authenticated service executed by the to-be-authenticated device, so that a to-be-authenticated item that is not adapted in a real service scenario can be further screened out in advance. This ensures that only necessary to-be-authenticated items are authenticated, so that authentication resources are effectively saved and authentication efficiency is improved.

According to a second aspect, this application provides an authentication apparatus. The authentication apparatus may be any device having a processing capability, for example, an authentication server or an authentication server cluster including authentication servers. The authentication apparatus includes: a determining unit, configured to determine a system architecture to which a to-be-authenticated device belongs; an obtaining unit, configured to obtain a to-be-authenticated service corresponding to the system architecture to which the to-be-authenticated device belongs; and an authentication unit, configured to authenticate the to-be-authenticated service of the to-be-authenticated device, to obtain an authentication result of the to-be-authenticated device.

In a possible design, the to-be-authenticated device is a vehicle; and the system architecture to which the to-be-authenticated device belongs is one of the following architectures: a distributed electrical/electronic architecture; a cross-domain integrated electrical/electronic architecture; or a central integrated electrical/electronic architecture.

In a possible design, the authentication unit is specifically configured to: if the system architecture corresponds to one to-be-authenticated service, authenticate the to-be-authenticated service in the to-be-authenticated device, to obtain an authentication level corresponding to the to-be-authenticated service, and determine the authentication level corresponding to the to-be-authenticated service as the authentication result of the to-be-authenticated device; or if the system architecture corresponds to a plurality of to-be-authenticated services, separately authenticate the plurality of to-be-authenticated services in the to-be-authenticated device, to obtain authentication levels respectively corresponding to the plurality of to-be-authenticated services, and obtain the authentication result of the to-be-authenticated device based on the plurality of authentication levels corresponding to the plurality of to-be-authenticated services.

In a possible design, when the system architecture to which the to-be-authenticated device belongs corresponds to the plurality of to-be-authenticated services, the authentication result of the to-be-authenticated device may be presented as at least one of the following: a table of a correspondence between the plurality of to-be-authenticated services and the plurality of authentication levels; a diagram of a correspondence between the plurality of to-be-authenticated services and the plurality of authentication levels; or a weighted average value of the plurality of authentication levels corresponding to the plurality of to-be-authenticated services.

In a possible design, the authentication unit is specifically configured to: obtain a mapping relationship between an authentication level corresponding to the to-be-authenticated service and a to-be-authenticated item, where in the mapping relationship, each authentication level corresponds to at least one to-be-authenticated item, and a to-be-authenticated item corresponding to any authentication level includes all to-be-authenticated items corresponding to a previous authentication level; and authenticate each authentication level in the mapping relationship in the to-be-authenticated device, and determine, as the authentication level corresponding to the to-be-authenticated service in the to-be-authenticated device, a highest authentication level in all authentication levels that are successfully authenticated. When any authentication level is authenticated, if all to-be-authenticated items corresponding to the authentication level are successfully authenticated in the to-be-authenticated device, it is determined that the authentication level is successfully authenticated in the to-be-authenticated device.

In a possible design, the authentication unit is specifically configured to: authenticate each authentication level in the mapping relationship in the to-be-authenticated device in ascending order of authentication levels, where when any authentication level is authenticated, if all to-be-authenticated items corresponding to the authentication level are successfully authenticated in the to-be-authenticated device, a next authentication level is authenticated; otherwise, a previous authentication level is determined as the authentication level corresponding to the to-be-authenticated service in the to-be-authenticated device.

In a possible design, the authentication apparatus may further include a construction unit. The construction unit is configured to: first determine each risk in the to-be-authenticated service and a risk level of the risk based on service logic of the to-be-authenticated service; then for each risk, define one to-be-authenticated item, and determine a security level corresponding to the to-be-authenticated item based on the risk level of the risk, where the to-be-authenticated item indicates to overcome the corresponding risk; and finally, define each authentication level based on a level range including security levels of all to-be-authenticated items, and establish a mapping relationship between any authentication level and to-be-authenticated items corresponding to all security levels that are not higher than the authentication level.

In a possible design, the security level is negatively correlated with the risk level.

In a possible design, the to-be-authenticated items in the mapping relationship are grouped into M groups based on a service feature. In this case, before authenticating each authentication level in the mapping relationship in the to-be-authenticated device, the authentication unit may further determine, based on a service feature of the to-be-authenticated service executed by the to-be-authenticated device, one or more groups that are in the M groups and that are not involved, and invalidate a to-be-authenticated item included in the one or more groups that are in the mapping relationship and that are not involved.

According to a third aspect, this application provides an authentication apparatus, including a processor, where the processor is connected to a memory, the memory is configured to store a computer program, and the processor is configured to execute the computer program stored in the memory, so that the authentication apparatus performs the method according to any design in the first aspect.

According to a fourth aspect, this application provides an authentication apparatus, including a processor and a memory, where the memory stores computer program instructions, and the processor runs the computer program instructions to implement the method according to any design in the first aspect.

According to a fifth aspect, this application provides a chip. The chip may include a processor and an interface. The processor is configured to read instructions through the interface, to perform the method according to any design in the first aspect.

According to a sixth aspect, this application provides an authentication system. The authentication system may include a to-be-authenticated device and an authentication apparatus. The authentication apparatus is configured to perform the method according to any design in the first aspect.

According to a seventh aspect, this application provides a computer-readable storage medium. The computer-readable storage medium stores a computer program. When the computer program is run, the method according to any design of the first aspect is implemented.

According to an eighth aspect, this application provides a computer program product. When the computer program product runs on a processor, the method according to any design of the first aspect is implemented.

For beneficial effects of the second aspect to the eighth aspect, refer to technical effects that can be achieved in corresponding designs in the first aspect. Details are not described herein again.

BRIEF DESCRIPTION OF DRAWINGS

FIG. 1 is an example of a diagram of a possible application scenario according to an embodiment of this application;

FIG. 2 is an example of a schematic flowchart of an authentication method according to an embodiment of this application;

FIG. 3 is an example of a comparison diagram of three in-vehicle architectures according to an embodiment of this application;

FIG. 4 is an example of a radar chart according to an embodiment of this application;

FIG. 5 is an example of a schematic flowchart of a mapping relationship construction method according to an embodiment of this application;

FIG. 6 is an example of a schematic flowchart of risk assessment of a diagnosis service according to an embodiment of this application;

FIG. 7 is an example of a flowchart of defining a to-be-authenticated item of a diagnosis service according to an embodiment of this application;

FIG. 8 is an example of a schematic flowchart of a method for authenticating a to-be-authenticated service according to an embodiment of this application;

FIG. 9 is an example of a diagram of service logic of a diagnosis service according to an embodiment of this application;

FIG. 10 is an example of a diagram of a structure of an authentication apparatus according to an embodiment of this application; and

FIG. 11 is an example of a diagram of a structure of another authentication apparatus according to an embodiment of this application.

DESCRIPTION OF EMBODIMENTS

An authentication method disclosed in embodiments of this application may be used to perform authentication on a to-be-authenticated device. For example, the to-be-authenticated device may be any terminal device having a communication capability, and in particular, may be a terminal device having various architectures and services. For example, the terminal device may be an intelligent device having a communication capability, including but not limited to: an intelligent transportation device like an automobile, a ship, an uncrewed aerial vehicle, a train, a cargo truck, a lorry, or an airborne vehicle; a smart home device like a television, a floor sweeping robot, a smart desk lamp, a speaker system, an intelligent lighting system, an electrical appliance control system, home background music, a home theater system, an intercom system, or video surveillance; and an intelligent manufacturing device like a robot, an industrial device, an industrial computer, smart logistics, or a smart factory. Alternatively, the terminal device may be a computer device having a communication capability, for example, a desktop computer, a personal computer, or a server. It should be further understood that the terminal device may alternatively be a portable electronic device having a communication capability, for example, a mobile phone, a tablet computer, a palmtop computer, a headset, a speaker, a wearable device (for example, a smartwatch), a vehicle-mounted device, a virtual reality device, or an augmented reality device. An example of the portable electronic device includes but is not limited to a portable electronic device using iOS®, Android®, Microsoft®, Harmony®, or another operating system. The portable electronic device may alternatively be, for example, a laptop computer (Laptop) with a touch-sensitive surface (for example, a touch panel).

The following describes in detail the technical solutions in embodiments of this application with reference to specific accompanying drawings.

It should be noted that the terms "system" and "network" in embodiments of this application may be used interchangeably. "Multiple" refers to two or more than two. "And/or" describes an association relationship between associated objects, and indicates that three relationships may exist. For example, A and/or B may indicate the following cases: Only A exists, both A and B exist, and only B exists, where A and B may be singular or plural. "One or more of the following items (pieces)" or a similar expression thereof refers to any combination of these items, including any combination of singular items (pieces) or plural items (pieces). For example, one or more of a, b, or c may indicate a, b, c, a and b, a and c, b and c, or a, b, and c, where a, b, and c may be singular or plural.

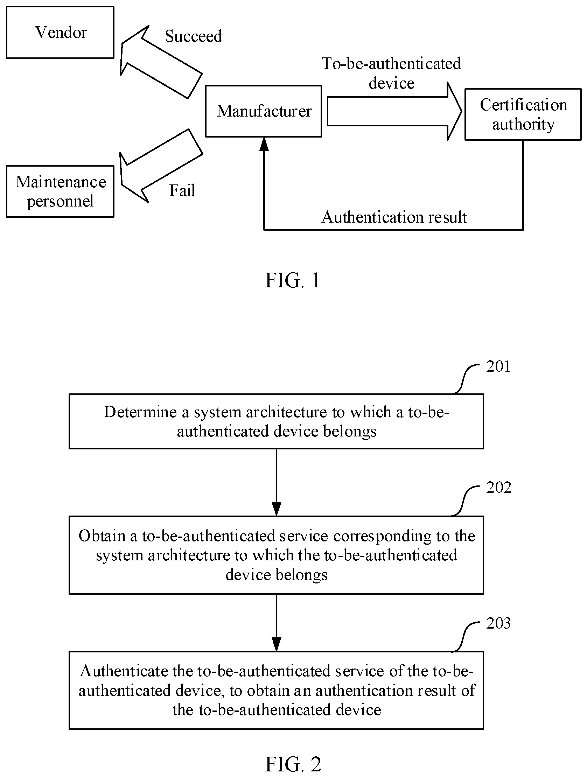

FIG. 1 is an example of a diagram of a possible application scenario according to an embodiment of this application. As shown in FIG. 1, after producing a to-be-authenticated device, a manufacturer may first submit the to-be-authenticated device to a certification authority, and the certification authority performs authentication and assessment, to obtain an authentication result of the to-be-authenticated device, and returns the authentication result to the manufacturer. If the manufacturer determines, based on the authentication result of the to-be-authenticated device, that the to-be-authenticated device is successfully authenticated, the manufacturer may submit the to-be-authenticated device to a vendor for sale. If it is determined that the to-be-authenticated device fails to be authenticated, the to-be-authenticated device may be submitted to maintenance personnel for check and correction. After maintenance is completed, the to-be-authenticated device is re-authenticated, and when the to-be-authenticated device is successfully authenticated, the to-be-authenticated device is submitted to the vendor for sale. In this way, authentication is performed before the to-be-authenticated device is delivered from a factory, so that it can be ensured that all to-be-authenticated devices sold on a side of the vendor are authenticated security devices. This helps improve use security of a user.

It should be noted that the foregoing application scenario is merely a possible example, and an authentication method may also be applied to an organization other than the certification authority, or may be applied to another phase. For example, the manufacturer may directly authenticate the to-be-authenticated device after producing the to-be-authenticated device, or the vendor may authenticate the repaired to-be-authenticated device after receiving the to-be-authenticated device that needs to be repaired and that is returned by the user. This is not specifically limited in embodiments of this application.

Further, FIG. 2 is an example of a schematic flowchart of an authentication method according to an embodiment of this application. The authentication method may be specifically performed by an authentication apparatus. The authentication apparatus is located in the authentication authority, and may be, for example, an authentication server or an authentication server cluster including a plurality of authentication servers, or may be another device having a processing capability. As shown in FIG. 2, the authentication method includes the following steps.

Step 201: An authentication apparatus determines a system architecture to which a to-be-authenticated device belongs.

In an example, the to-be-authenticated device is a vehicle. In this case, the system architecture to which the to-be-authenticated device belongs may be one of the following three electrical/electronic architectures (electrical/electronic architectures, EEAs): a distributed electrical/electronic architecture (Distributed EEA), a domain-centralized electrical/-electronic architecture (Domain-centralized EEA), and a vehicle-centralized electrical/electronic architecture (Vehicle-Centralized EEA).

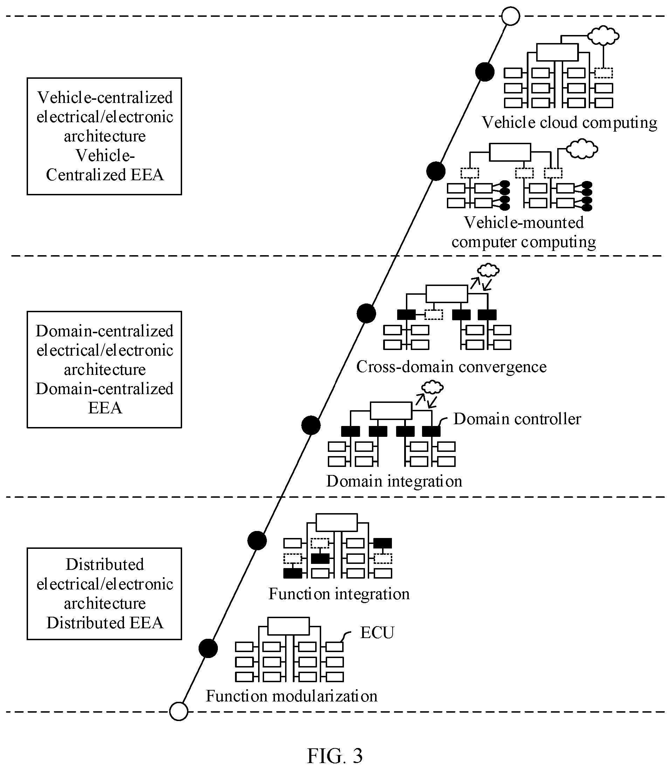

FIG. 3 is an example of a comparison diagram of three in-vehicle architectures according to an embodiment of this application. Details are shown in FIG. 3.

The distributed EEA is a conventional in-vehicle architecture that evolves from a function modularization phase to a function integration phase. In the function modularization phase, a single electronic control unit (electronic control unit, ECU) is usually responsible for controlling only a single functional unit. For example, light on the vehicle corresponds to one ECU, a door corresponds to one ECU, and a passive entry system corresponds to one ECU. ECUs are independent of each other, are connected to each other via a controller area network (controller area network, CAN) bus or a local interconnect network (local interconnect network, LIN) bus, and exchange information according to a predefined communication protocol. In the function integration phase, a single ECU may be responsible for a plurality of functional units. For example, a door and a passive entry system are controlled by one ECU. ECUs are still independent of each other. However, a quantity of ECUs is greatly reduced compared with that in the function modularization phase.

The domain-centralized EEA is a currently commonly used in-vehicle architecture that evolves from a domain integration phase to a cross-domain convergence phase. In the domain integration phase, the entire vehicle is divided into a plurality of domains based on functions, for example, a power domain, a chassis domain, a vehicle body domain, a cockpit domain, and an autonomous driving domain. A corresponding domain controller is disposed in each domain, each domain controller is connected to all ECUs in the corresponding domain, and domain controllers are connected to each other via the Ethernet (ethernet, ETH) or a CAN with flexible data-rate (CAN with flexible data-rate, CANFD). In the cross-domain convergence phase, a plurality of domain controllers perform cross-domain convergence, and a cross-domain control unit performs unified control. For example, in a cross-domain convergence solution, a power domain, a chassis domain, and a vehicle body domain are combined into a vehicle control domain. In this way, the five function domains may be transited to three function domains: an autonomous driving domain, an intelligent cockpit domain, and a vehicle control domain.

The vehicle-centralized EEA is an ideal in-vehicle architecture in the future. It is expected to evolve from a vehicle-mounted computer computing phase to a vehicle cloud computing phase. In the vehicle-mounted computer computing phase, a functional domain is further upgraded to a more general vehicle-mounted computer computing platform, and enters from the functional domain to a zone domain (for example, a middle domain, a left domain, and a right domain), and a corresponding zonal controller platform (zonal control unit, ZCU) is set in each zone domain, which is an elliptical device shown in FIG. 3, and is configured to: connect components such as a sensor, an actuator, and an ECU in this zone domain, perform preliminary calculation and processing on sensor data in this zone domain, and complete network protocol conversion in this zone domain. In the vehicle cloud computing phase, some or all functions of the vehicle are further transferred to a cloud, sensors and actuators on the vehicle can be defined and controlled by software, and components on the vehicle gradually become standard components. This further simplifies an in-vehicle architecture, and completely implements software-defined vehicle functions.

In the foregoing example, three possible in-vehicle architectures in the field of vehicle-to-everything are abstracted based on a time span, and a mapping between each possible in-vehicle architecture and a to-be-authenticated service is constructed, so that the authentication method can be applied to vehicle models of the three in-vehicle architectures. These vehicle models cover most vehicle models in the field of vehicle-to-everything. In this way, universality of the authentication method can be improved.

It should be understood that the foregoing three in-vehicle architectures are merely examples. With development of an in-vehicle technology, more in-vehicle architectures may be derived in the future. Therefore, the to-be-authenticated device may further be another in-vehicle architecture in the future. This is not specifically limited in embodiments of this application.

Step 202: The authentication apparatus obtains a to-be-authenticated service corresponding to the system architecture to which the to-be-authenticated device belongs.

In step 202, a to-be-authenticated service corresponding to any system architecture may be a representative service of a device belonging to the system architecture. A correspondence between a system architecture and a representative service may be pre-configured in the authentication apparatus, and may be further updated with development and evolution of each phase of the system architecture.

In an example, it is assumed that the to-be-authenticated device is a vehicle.

If the system architecture to which the vehicle belongs is the distributed EEA, the to-be-authenticated service may include one or more of the following services: a digital key, over-the-air technology (over-the-air technology, OTA) update, near-end diagnosis, door unlocking, light brightness adjustment, vehicle speed alarm, and the like.

If the system architecture to which the vehicle belongs is the domain-centralized EEA, the to-be-authenticated service may include one or more of the following services: a digital key, OTA update, mobile phone parking, remote diagnosis, wireless charging, remote control, an electronic brake, wiper sensing adjustment, and the like.

If the system architecture to which the vehicle belongs is the vehicle-centralized EEA, the to-be-authenticated service may include one or more of the following services: engine start-stop, autonomous driving, self-driving, cloud route planning, a digital key, OTA update, mobile phone parking, remote diagnosis, and the like.

It should be noted that, although a same to-be-authenticated service may be included in different system architectures, if service logic of the to-be-authenticated service is different in different system architectures, subsequent authentication methods for the to-be-authenticated service are also different. For example, in the foregoing example, remote control is included in both the domain-centralized EEA and the vehicle-centralized EEA. However, in the domain-centralized EEA, the remote control is used to control a vehicle interior component through communication between user equipment and an in-vehicle controller. Therefore, a subsequent authentication method for remote control includes authenticating the communication between the user equipment and the in-vehicle controller and authenticating communication between the in-vehicle controller and an in-vehicle ECU. However, in the vehicle-centralized EEA, the remote control is used to control a vehicle interior component through communication between user equipment and a cloud computing platform. Therefore, a subsequent authentication method for remote control includes authenticating the communication between the user equipment and the cloud computing platform and authenticating communication between an in-vehicle controller and an in-vehicle ECU.

Step 203: The authentication apparatus authenticates the to-be-authenticated service of the to-be-authenticated device, to obtain an authentication result of the to-be-authenticated device.

In this embodiment of this application, considering that the to-be-authenticated device may have only one to-be-authenticated service or may have a plurality of to-be-authenticated services, corresponding authentication procedures may be separately set for the two possible cases. If the system architecture to which the to-be-authenticated device belongs corresponds to only one to-be-authenticated service, the authentication apparatus may directly authenticate the to-be-authenticated service in the to-be-authenticated device, to obtain an authentication level corresponding to the to-be-authenticated service. The authentication level corresponding to the to-be-authenticated service is the authentication result of the to-be-authenticated device. If the system architecture to which the to-be-authenticated device belongs corresponds to a plurality of to-be-authenticated services, the authentication apparatus may separately authenticate the plurality of to-be-authenticated services in the to-be-authenticated device, to obtain authentication levels respectively corresponding to the plurality of to-be-authenticated services, and then, obtain the authentication result of the to-be-authenticated device based on the plurality of authentication levels corresponding to the plurality of to-be-authenticated services.

In addition, usually, one system architecture may correspond to a plurality of to-be-authenticated services, but the plurality of to-be-authenticated services are not necessarily all suitable for a to-be-authenticated device. In this case, after the to-be-authenticated services corresponding to the system architecture to which the to-be-authenticated device belongs are obtained, the to-be-authenticated services further needs to be screened based on a real scenario in which the to-be-authenticated device executes the services, to screen out, from the to-be-authenticated services corresponding to the system architecture, a to-be-authenticated service that is not suitable for the to-be-authenticated device, and only retain a to-be-authenticated service suitable for the to-be-authenticated device for authentication, so as to avoid an unnecessary authentication operation. This improves authentication efficiency and saves authentication resources.

Further, when the plurality of to-be-authenticated services are corresponded, an authentication result of the to-be-authenticated device may include one or more values obtained through calculation based on the plurality of authentication levels corresponding to the plurality of to-be-authenticated services, or may directly include a correspondence between the plurality of to-be-authenticated devices and the plurality of authentication levels, and the correspondence may be presented in a form of data table, data graph, or queue, or in another form. For example, it is assumed that the to-be-authenticated device belongs to the foregoing domain-centralized EEA system architecture, and the to-be-authenticated services corresponding to the domain-centralized EEA system architecture include a digital key, OTA update, mobile phone parking, remote diagnosis, wireless charging, and remote control. Authentication is performed on the six to-be-authenticated services in the to-be-authenticated device, to determine that an authentication level corresponding to the digital key is 3, an authentication level corresponding to the OTA update is 4, an authentication level corresponding to the mobile phone parking is 1, an authentication level corresponding to the remote diagnosis is 3, an authentication level corresponding to the wireless charging is 4, and an authentication level corresponding to the remote control is 5.

In a possible presentation form, the authentication apparatus may perform weighted averaging on the authentication levels corresponding to the six to-be-authenticated services, and use a weighted average value obtained through calculation as the authentication result corresponding to the to-be-authenticated device. The weighted average value may indicate an overall security level of the to-be-authenticated device. In this way, the user can intuitively and clearly view the overall security level of the to-be-authenticated device by viewing the authentication result.

For example, if weights corresponding to the digital key, the OTA update, the mobile phone parking, the remote diagnosis, the wireless charging, and the remote control are respectively $w_1$, $w_2$, $w_3$, $w_4$, $w_5$, and $w_6$, the authentication result of the to-be-authenticated device may be expressed as:

$$L = \frac{3w_1 + 4w_2 + w_3 + 3w_4 + 4w_5 + 5w_6}{6}$$

In another possible presentation form, the authentication apparatus may construct, based on the authentication levels corresponding to the six to-be-authenticated services, a correspondence table shown in the following Table 1, and use the correspondence table as the authentication result of the to-be-authenticated device.

Table 1

| Authentication result of the to-be-authenticated device | | | | | |
|---|---|---|---|---|---|
| Digital key | OTA update | Mobile phone parking | Remote diagnosis | Wireless charging | Remote control |
| 3 | 4 | 1 | 3 | 4 | 5 |

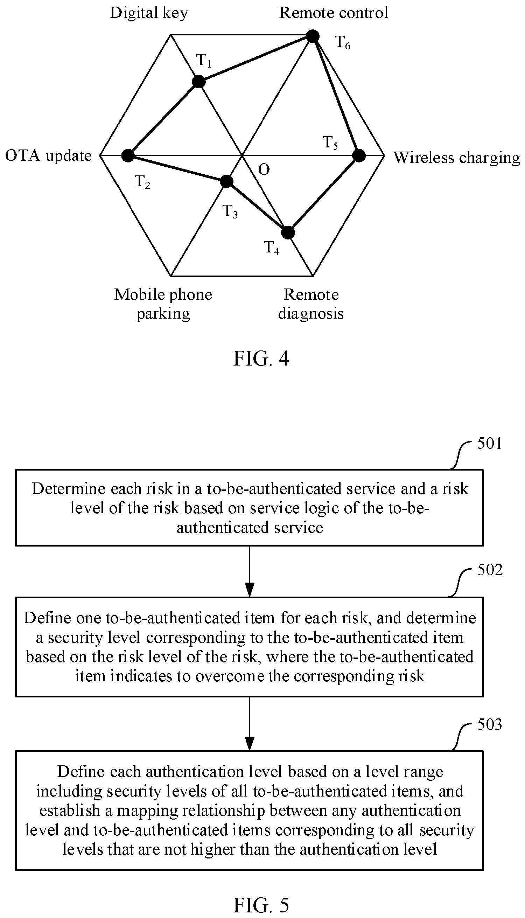

In still another possible presentation form, the authentication apparatus may construct, based on the authentication levels corresponding to the six to-be-authenticated services, a radar chart shown in FIG. 4, and use the radar chart as the authentication result of the to-be-authenticated device.

As shown in FIG. 4, in the radar chart, authentication results of the six to-be-authenticated services form a hexagon. In addition, each to-be-authenticated service corresponds to one level label (that is, the digital key corresponds to a level label $T_1$, the OTA update corresponds to a level label $T_2$, the mobile phone parking corresponds to a level label $T_3$, the remote diagnosis corresponds to a level label $T_4$, the wireless charging corresponds to a level label $T_5$, and the remote control corresponds to a level label $T_6$). A higher authentication level of a to-be-authenticated service indicates a longer distance between a level label corresponding to the to-be-authenticated service and a central point O of the hexagon, and further indicates higher security of the to-be-authenticated service. In addition, in the radar chart, any two adjacent level labels in the six level labels may be connected to each other, and an area of a polygon formed by using these connection lines is viewed. A larger area indicates higher security levels of the six to-be-authenticated services in the to-be-authenticated device, and further indicates the higher overall security level of the to-be-authenticated device.

In the foregoing two presentation forms, regardless of whether the authentication result is presented as the correspondence table or the radar chart, the authentication result includes each to-be-authenticated service and an authentication level of the to-be-authenticated service. Therefore, the user can comprehensively learn of security levels of the to-be-authenticated device on different to-be-authenticated services by viewing the authentication result.

The foregoing content describes how to determine the authentication result of the to-be-authenticated device based on the authentication levels of the plurality of to-be-authenticated services. The following describes an authentication process of each to-be-authenticated service in detail.

It should be noted that, in this embodiment of this application, the authentication process of each to-be-authenticated service includes a preparation phase and an application phase. In the preparation phase, a mapping relationship between an authentication level corresponding to the to-be-authenticated service and a to-be-authenticated item is constructed. In the application phase, the to-be-authenticated service is authenticated based on the mapping relationship, constructed in the preparation phase, between the to-be-authenticated item and the authentication level corresponding to the to-be-authenticated service. The following separately describes the preparation phase and the application phase in detail.

**Preparation Phase**

FIG. 5 is an example of a schematic flowchart of a mapping relationship construction method according to an embodiment of this application. As shown in FIG. 5, the method includes the following steps.

Step 501: An authentication apparatus determines each risk in a to-be-authenticated service and a risk level of the risk based on service logic of the to-be-authenticated service.

The service logic may include an execution body, a control flow, and a data flow. The execution body is a unit or a component that executes a service. The control flow is a sequence in which program elements are arranged to determine a program execution sequence. The data flow is an entire data flow sequence in which data flows from a start point to an end point under control of the control flow. The data flow includes an input flow and an output flow. Threat analysis and risk assessment (threat analysis and risk assessment, TARA) may be performed based on the execution body, the control flow, and the data flow that are included in the service logic of the to-be-authenticated service, to obtain an asset included in the to-be-authenticated service, a risk that may exist when the to-be-authenticated service is executed, a risk level of the risk, and the like.

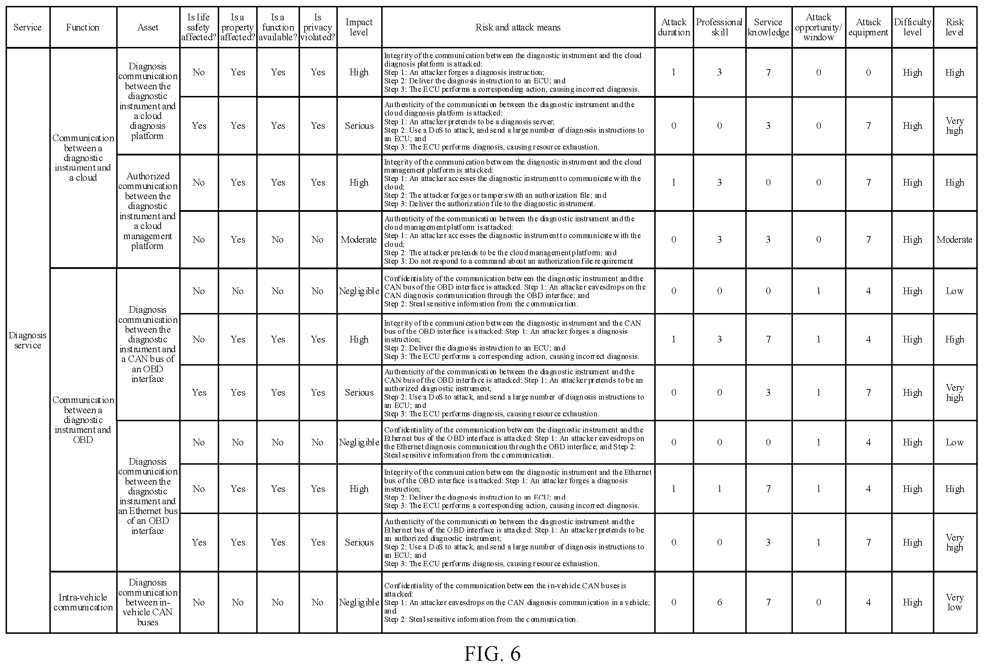

For example, it is assumed that the to-be-authenticated service is a diagnosis service. FIG. 6 is an example of a schematic flowchart of TARA of a diagnosis service according to an embodiment of this application. Details are shown in FIG. 6.

First, from a function perspective, the diagnosis service may be divided into three functions: communication between a diagnostic instrument and a cloud, communication between the diagnostic instrument and on-board diagnostics (on-board diagnostics, OBD), and intra-vehicle communication. The communication between the diagnostic instrument and the cloud includes diagnosis communication between the diagnostic instrument and a cloud diagnosis platform and authorized communication between the diagnostic instrument and a cloud management platform. The communication between the diagnostic instrument and the OBD includes diagnosis communication between the diagnostic instrument and a CAN bus of an OBD interface and diagnosis communication between the diagnostic instrument and the Ethernet bus of the OBD interface. The intra-vehicle communication includes diagnosis communication between in-vehicle CAN buses. The diagnosis communication or authorized communication is also referred to as an asset.

Second, for each asset, a possible vulnerability of the asset is reviewed from an attack perspective, and after it is determined that it is feasible to attack the vulnerability, the vulnerability is defined as a possible risk in the asset. For example, as shown in FIG. 6, for the diagnosis communication between the diagnostic instrument and the cloud diagnosis platform, after a diagnosis procedure of the diagnosis communication is reviewed, it is found that the diagnosis communication may be cracked from two vulnerabilities: integrity of the communication between the diagnostic instrument and the cloud diagnosis platform and authenticity of the communication between the diagnostic instrument and the cloud diagnosis platform. Therefore, it may be determined that in the diagnosis communication between the diagnostic instrument and the cloud diagnosis platform, there are two risks: The integrity of the communication between the diagnostic instrument and the cloud diagnosis platform is attacked, and the authenticity of the communication between the diagnostic instrument and the diagnosis platform is attacked.

In addition, for each risk in each asset, if the asset is attacked by the risk, the risk is scored from four perspectives: "whether life safety is affected", "whether property is affected", "whether function availability is affected", and "whether privacy is infringed". Further, weighted averaging is performed on the four scores based on weights corresponding to the four preset angles, and a level of impact caused when the asset is attacked by the risk is evaluated based on a weighted average value. The impact level may be subsequently used as a reference for determining a risk level of the risk.

Then, a corresponding attack means is set for each risk in the asset and an attack tool is used to attack the asset in batches in the set attack means. The risk is scored in perspectives such as attack duration (that is, duration required for an attacker to crack the asset in the attack means), a professional skill (that is, a professional skill that the attacker needs to have to implement the attack means), service knowledge (that is, a degree to which the attacker needs to know the service to implement the attack means, for example, if the attacker needs to crack a proprietary protocol, the attacker needs to have strong service knowledge; or if the attacker only needs to crack a common protocol, the attacker does not need to have strong service knowledge), an attack opportunity/window (that is, effort that the attacker needs to put to implement the attack means, for example, if only a remote wireless attack is required to control a vehicle window to be open, the attack opportunity/window is easy; or if the vehicle window needs to be manually opened, the attack opportunity/window is difficult), and attack equipment (that is, equipment that the attacker needs to use, to launch the attack means, for example, if only a standard computer is used, the attack equipment is easy to obtain; or if a special device is used, the attack equipment is difficult to obtain). Further, weighted averaging is performed on these scores based on preset weights. When the asset is attacked by the risk, a difficulty level of the asset is evaluated based on a weighted average value. The difficulty level may be subsequently used as another reference for determining a risk level of the risk.

Finally, for each risk, a risk level of the risk is comprehensively evaluated based on an impact level and a difficulty level of the risk. The risk level may be evaluated according to a principle that the risk level and the impact level is positively correlated with the risk level is negatively correlated with the difficulty level. In other words, if impact caused by a risk is more serious and an asset is more likely to be attacked, a risk level corresponding to the risk is higher; and if impact caused by an asset is more minor and an asset is less likely to be attacked, a risk level of the risk is lower.

It should be noted that FIG. 6 shows only an example of a possible TARA procedure. The TARA procedure may be specifically based on ISO 21434 TARA, and may have another variation. For example, an attack means may be set to another form, or more labels may be used to evaluate an impact level and/or a difficulty level, or one or more of the labels may be deleted, or only the impact level is considered and the difficulty level is not considered, or only the difficulty level is considered and the impact level is not considered, or more or fewer levels than those shown in the figure may be set. This is not specifically limited in embodiments of this application.

Step 502: For each risk, the authentication apparatus defines one to-be-authenticated item, and determines a security level corresponding to the to-be-authenticated item based on a risk level of the risk. The to-be-authenticated item indicates to overcome the corresponding risk.

In an optional implementation, considering that a risk that has more serious impact and is more likely to be attacked should be resolved first, the security level and the risk level may be defined from a perspective of elimination and reduction, that is, according to a principle that the security level is negatively correlated with the risk level, a security level corresponding to each risk is defined with reference to a risk level corresponding to the risk, so that a risk with a higher risk level corresponds to a lower security level, and a risk with a lower risk level corresponds to a higher security level. In this way, a high risk can be resolved first, and this is proper.

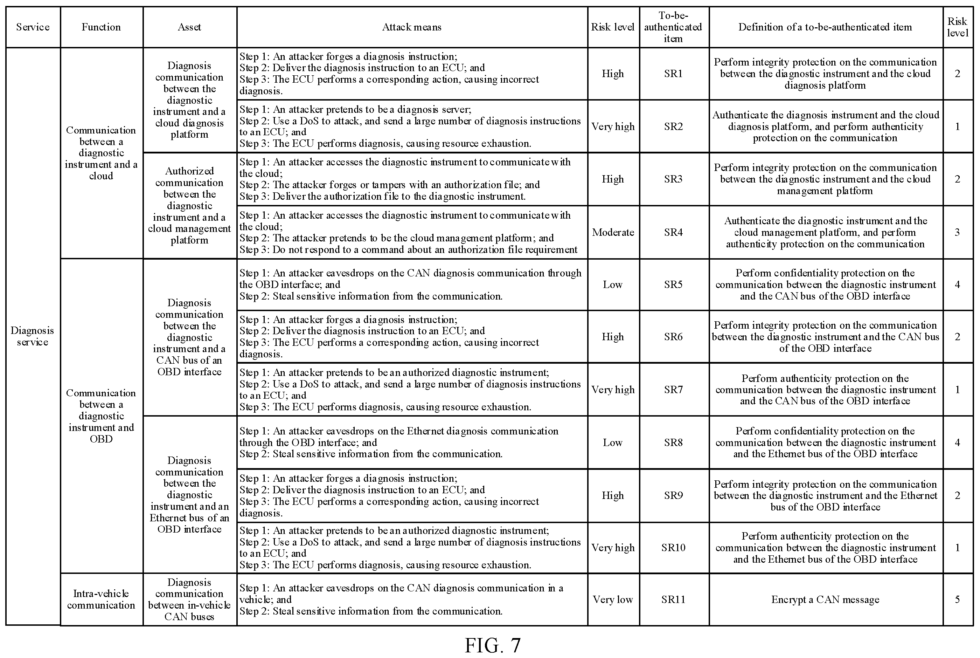

The diagnosis service is still used as an example. It is assumed that a level range of the risk level and a level range of the security level are both integers in [1, 5]. FIG. 7 is an example of a flowchart of defining a to-be-authenticated item of a diagnosis service according to an embodiment of this application. Details are shown in FIG. 7.

There are two risks in the diagnosis communication between the diagnostic instrument and the cloud diagnosis platform: The integrity of the communication between the diagnostic instrument and the cloud diagnosis platform is attacked, and the authenticity of the communication between the diagnostic instrument and the cloud diagnosis platform is attacked. For a risk that the integrity of the communication between the diagnostic instrument and the cloud diagnosis platform is attacked, a to-be-authenticated item SR1 is defined. The to-be-authenticated item SR1 is used to perform integrity protection on the communication between the diagnostic instrument and the cloud diagnosis platform, and a risk level of the risk is 4. Therefore, a security level of the to-be-authenticated item SR1 is defined as 2. For a risk that the authenticity of the communication between the diagnostic instrument and the cloud diagnosis platform is attacked, a to-be-authenticated item SR2 is defined. The to-be-authenticated item SR2 is used to: authenticate the diagnostic instrument and the cloud diagnosis platform, and perform authenticity protection on the communication between the diagnostic instrument and the cloud diagnosis platform. A risk level of the risk is 5. Therefore, a security level of the to-be-authenticated item SR2 is defined as 1.

There are two risks in the authorized communication between the diagnostic instrument and the cloud management platform: Integrity of the communication between the diagnostic instrument and the cloud management platform is attacked, and authenticity of the communication between the diagnostic instrument and the cloud management platform is attacked. For a risk that the integrity of the communication between the diagnostic instrument and the cloud management platform is attacked, a to-be-authenticated item SR3 is defined. The to-be-authenticated item SR3 is used to perform integrity protection on the communication between the diagnostic instrument and the cloud management platform, and a risk level of the risk is 4. Therefore, a security level of the to-be-authenticated item SR3 is defined as 2. For a risk that the authenticity of the communication between the diagnostic instrument and the cloud management platform is attacked, a to-be-authenticated item SR4 is defined. The to-be-authenticated item SR4 is used to: authenticate the diagnostic instrument and the cloud management platform, and perform authenticity protection on the communication between the diagnostic instrument and the cloud management platform. A risk level of the risk is 3. Therefore, a security level of the to-be-authenticated item SR4 is defined as 3.

There are risks in the communication between the diagnostic instrument and the CAN bus of the OBD interface: Confidentiality of the communication between the diagnostic instrument and the CAN bus of the OBD interface is attacked, integrity of the communication between the diagnostic instrument and the CAN bus of the OBD interface is attacked, and authenticity of the communication between the diagnostic instrument and the CAN bus of the OBD interface is attacked. For a risk that the confidentiality of the communication between the diagnostic instrument and the CAN bus of the OBD interface is attacked, a to-be-authenticated item SR5 is defined. The to-be-authenticated item SR5 is used to perform confidentiality protection on the communication between the diagnostic instrument and the CAN bus of the OBD interface, and a risk level of the risk is 2. Therefore, a security level of the to-be-authenticated item SR5 is defined as 4. For a risk that the integrity of the communication between the diagnostic instrument and the CAN bus of the OBD interface is attacked, a to-be-authenticated item SR6 is defined. The to-be-authenticated item SR6 is used to perform integrity protection on the communication between the diagnostic instrument and the CAN bus of the OBD interface, and a risk level of the risk is 4. Therefore, a security level of the to-be-authenticated item SR6 is defined as 2. For a risk that the authenticity of the communication between the diagnostic instrument and the CAN bus of the OBD interface is attacked, a to-be-authenticated item SR7 is defined. The to-be-authenticated item SR7 is used to: authenticate the diagnostic instrument and the CAN bus of the OBD interface, and perform authenticity protection on the communication between the diagnostic instrument and the CAN bus of the OBD interface. A risk level of the risk is 5. Therefore, a security level of the to-be-authenticated item SR7 is defined as 1.

There are risks in the communication between the diagnostic instrument and the Ethernet bus of the OBD interface: Confidentiality of the communication between the diagnostic instrument and the Ethernet bus of the OBD interface is attacked, integrity of the communication between the diagnostic instrument and the Ethernet bus of the OBD interface is attacked, and authenticity of the communication between the diagnostic instrument and the Ethernet bus of the OBD interface is attacked. For a risk that the confidentiality of the communication between the diagnostic instrument and the Ethernet bus of the OBD interface is attacked, a to-be-authenticated item SR8 is defined. The to-be-authenticated item SR8 is used to perform confidentiality protection on the communication between the diagnostic instrument and the Ethernet bus of the OBD interface, and a risk level of the risk is 2. Therefore, a security level of the to-be-authenticated item SR8 is defined as 4. For a risk that the integrity of the communication between the diagnostic instrument and the Ethernet bus of the OBD interface is attacked, a to-be-authenticated item SR9 is defined. The to-be-authenticated item SR9 is used to perform integrity protection on the communication between the diagnostic instrument and the Ethernet bus of the OBD interface, and a risk level of the risk is 4. Therefore, a security level of the to-be-authenticated item SR9 is defined as 2. For a risk that the authenticity of the communication between the diagnostic instrument and the Ethernet bus of the OBD interface is attacked, a to-be-authenticated item SR10 is defined. The to-be-authenticated item SR10 is used to: authenticate the diagnostic instrument and the Ethernet bus of the OBD interface, and perform authenticity protection on the communication between the diagnostic instrument and the Ethernet bus of the OBD interface. A risk level of the risk is 5. Therefore, a security level of the to-be-authenticated item SR10 is defined as 1.

There is a risk in the diagnosis communication between the in-vehicle CAN buses: Confidentiality of a CAN message is attacked. For the risk, a to-be-authenticated item SR11 is defined. The to-be-authenticated item SR11 is used to encrypt the CAN message, and a risk level of the risk is 1. Therefore, a security level of the to-be-authenticated item SR11 is defined as 5.

With reference to the to-be-authenticated item defined for the diagnosis service in FIG. 7, an association relationship between a risk, a to-be-authenticated item, and a security level in the diagnosis service may be simplified as shown in the following Table 2.

Table 2

| Diagnosis service | | |
|---|---|---|
| To-be-authenticated item number | To-be-authenticated item | Security level |
| SR1 | Perform integrity protection on the communication between the diagnostic instrument and the diagnosis platform | 2 |
| SR2 | Authenticate the diagnostic instrument and the diagnosis platform, and perform authenticity protection on the communication. | 1 |
| SR3 | Perform integrity protection on the communication between the diagnostic instrument and the management platform | 2 |
| SR4 | Authenticate the diagnostic instrument and the management platform, and perform authenticity protection on the communication | 3 |
| SR5 | Perform confidentiality protection on the communication between the diagnostic instrument and the CAN bus of the OBD interface | 4 |
| SR6 | Perform integrity protection on the communication between the diagnostic instrument and the CAN bus of the OBD interface | 2 |
| SR7 | Perform authenticity protection on the communication between the diagnostic instrument and the CAN bus of the OBD interface | 1 |
| SR8 | Perform confidentiality protection on the communication between the diagnostic instrument and the Ethernet bus of the OBD interface | 4 |
| SR9 | Perform confidentiality protection on the communication between the diagnostic instrument and the Ethernet bus of the OBD interface | 2 |
| SR10 | Perform confidentiality protection on the communication between the diagnostic instrument and the Ethernet bus of the OBD interface | 1 |
| SR11 | Encrypt the CAN message | 5 |

It should be noted that Table 2 is merely an example for describing a possible case in which the to-be-authenticated item is defined based on the diagnosis service. In another example, the diagnosis service may further include another to-be-authenticated item. For example, in another example, there may be a risk in the diagnosis communication between the in-vehicle CAN buses: Security of a sensitive diagnosis service is attacked. Therefore, a corresponding attack manner may be further set for the risk. For example: An attacker forges a diagnosis instruction, and delivers a diagnosis failure to an ECU, and the ECU performs a response action, causing incorrect diagnosis. Further, a corresponding to-be-authenticated item S12 may be set for the risk. The to-be-authenticated item S12 is used to perform security protection on access/authentication of the sensitive diagnosis service. It should be understood that the to-be-authenticated item may be specifically configured by a person skilled in the art in an actual application scenario, and is not limited to having only the to-be-authenticated items described above.

Step 503: The authentication apparatus defines each authentication level based on a level range including security levels of all to-be-authenticated items, and establishes a mapping relationship between any authentication level and to-be-authenticated items corresponding to all security levels that are not higher than the authentication level.

In this embodiment of this application, to-be-authenticated items included in any authentication level may include to-be-authenticated items corresponding to all security levels of the same level or a lower level. For example, with reference to the diagnosis service shown in Table 2, security levels of the to-be-authenticated item S1 to the to-be-authenticated item S11 are in an interval [1, 5]. Therefore, an authentication level 1, an authentication level 2, an authentication level 3, an authentication level 4, and an authentication level 5 may be defined based on the interval [1, 5]. Further, Table 3 shows an example of a table of a mapping relationship between an authentication level and a to-be-authenticated item according to an embodiment of this application.

Table 3

| Mapping relationship between an authentication level corresponding to the diagnosis service and a to-be-authenticated item | | | | |
|---|---|---|---|---|
| Authentication level 1 | Authentication level 2 | Authentication level 3 | Authentication level 4 | Authentication level 5 |
| SR2 | SR2 | SR2 | SR2 | SR2 |
| SR7 | SR7 | SR7 | SR7 | SR7 |
| SR10 | SR10 | SR10 | SR10 | SR10 |
| | SR1 | SR1 | SR1 | SR1 |
| | SR3 | SR3 | SR3 | SR3 |
| | SR6 | SR6 | SR6 | SR6 |
| | SR9 | SR9 | SR9 | SR9 |
| | | SR4 | SR4 | SR4 |
| | | | SR5 | SR5 |
| | | | SR8 | SR8 |
| | | | | SR11 |

Refer to Table 3.

When the authentication level is 1, all to-be-authenticated items whose security levels are 1 may be included, that is, the to-be-authenticated item SR2, the to-be-authenticated item SR7, and the to-be-authenticated item SR10.

When the authentication level is 2, all to-be-authenticated items whose security levels are 1 and 2 may be included, that is, the to-be-authenticated item SR2, the to-be-authenticated item SR7, the to-be-authenticated item SR10, the to-be-authenticated item SR1, the to-be-authenticated item SR3, the to-be-authenticated item SR6, and the to-be-authenticated item SR9.

When the authentication level is 3, all to-be-authenticated items whose security levels are 1, 2, and 3 may be included, that is, the to-be-authenticated item SR2, the to-be-authenticated item SR7, the to-be-authenticated item SR10, the to-be-authenticated item SR1, the to-be-authenticated item SR3, the to-be-authenticated item SR6, the to-be-authenticated item SR9, and the to-be-authenticated item SR4.

When the authentication level is 4, all to-be-authenticated items whose security levels are 1, 2, 3, and 4 may be included, that is, the to-be-authenticated item SR2, the to-be-authenticated item SR7, the to-be-authenticated item SR10, the to-be-authenticated item SR1, the to-be-authenticated item SR3, the to-be-authenticated item SR6, the to-be-authenticated item SR9, the to-be-authenticated item SR4, the to-be-authenticated item SR5, and the to-be-authenticated item SR8.

When the authentication level is 5, all to-be-authenticated items whose security levels are 1, 2, 3, 4, and 5 may be included, that is, the to-be-authenticated item SR2, the to-be-authenticated item SR7, the to-be-authenticated item SR10, the to-be-authenticated item SR1, the to-be-authenticated item SR3, the to-be-authenticated item SR6, the to-be-authenticated item SR9, the to-be-authenticated item SR4, the to-be-authenticated item SR5, the to-be-authenticated item SR8, and the to-be-authenticated item SR11.

It can be learned that a higher authentication level indicates more to-be-authenticated items that need to be authenticated, that is, more authentication needs to be performed. In this way, reliability of a higher authentication level that is successfully authenticated is higher, and an authentication result is more proper.

It should be noted that the mapping relationship may be further updated. For example, the mapping relationship may be automatically updated by the diagnostic apparatus based on an actual service execution status, or the mapping relationship may be updated based on an indication of diagnosis personnel based on an actual service status. An update manner includes but is not limited to: adding a new to-be-authenticated item and/or authentication level to the mapping relationship, deleting one or more to-be-authenticated items from the mapping relationship, modifying a to-be-authenticated item corresponding to one or more authentication levels, or the like.

In an example, after to-be-authenticated items are defined, the to-be-authenticated items may be further grouped based on a service feature. The service feature may be specifically an asset or a function. For example, all to-be-authenticated items corresponding to one asset may be as one group, or all to-be-authenticated items corresponding to one function are as one group. In this way, to-be-authenticated items of a same service feature are coupled into one group, so that the to-be-authenticated items can be adjusted in an actual service scenario in subsequent application. For example, when a function does not exist in an actual service scenario, a group corresponding to the function is directly deleted. This avoids authenticating a to-be-authenticated item that does not need to be authenticated, and effectively reduces authentication time.

For example, it is assumed that the to-be-authenticated items SR1 to SR11 are defined in the diagnosis service in the manner shown in FIG. 7. Table 4 is a schematic table of a manner of grouping the to-be-authenticated items SR1 to SR11 according to an embodiment of this application.

Table 4

| | |
|---|---|
| | SR1 |
| Communication between the diagnostic instrument and the cloud | SR2 |
| | SR3 |
| | SR4 |
| | SR5 |
| | SR6 |
| Communication between the diagnostic instrument and the OBD | SR7 |
| | SR8 |
| | SR9 |
| | SR10 |
| Intra-vehicle communication | SR11 |

As shown in Table 4, in this example, the to-be-authenticated items SR1 to SR11 are divided into three groups based on functions. One group corresponds to a function of the communication between the diagnostic instrument and the cloud, and includes the to-be-authenticated items SR1 to SR4. Another group corresponds to a function of the communication between the diagnostic instrument and the OBD interface, and includes the to-be-authenticated item SR5 to SR10. Another group corresponds to a function of the intra-vehicle communication, and includes the to-be-authenticated item SR11.

In the preparation phase, a mapping relationship between a to-be-authenticated item and an authentication level is abstracted with reference to a risk that may exist in the service logic of the to-be-authenticated service, so that authentication can be performed on the risk that may exist in the service logic in a targeted manner subsequently. In this way, successful authentication can mean that the risk in the service logic of the to-be-authenticated service can be overcome, and the to-be-authenticated service is secure in an execution process. It can be learned that this mapping construction manner can better adapt to a real service scenario, and a subsequent authentication result can be more reliable.

**Application phase**

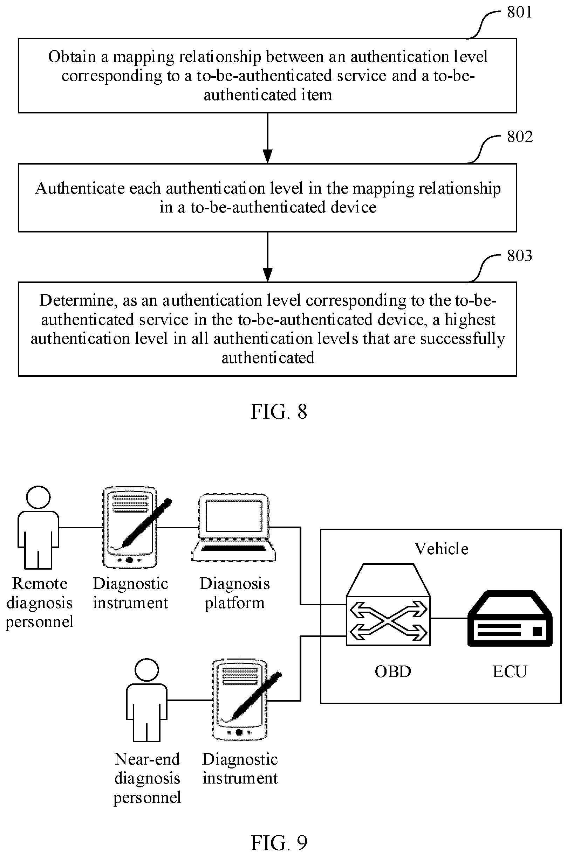

FIG. 8 is an example of a schematic flowchart of a method for authenticating a to-be-authenticated service according to an embodiment of this application. As shown in FIG. 8, the method includes the following steps.

Step 801: An authentication apparatus obtains a mapping relationship between an authentication level corresponding to a to-be-authenticated service and a to-be-authenticated item.

In the mapping relationship between an authentication level and a to-be-authenticated item, each authentication level may correspond to at least one to-be-authenticated item, and a to-be-authenticated item corresponding to any authentication level includes all to-be-authenticated items corresponding to a previous authentication level.

Step 802: The authentication apparatus authenticates each authentication level in the mapping relationship in a to-be-authenticated device.

When any authentication level is authenticated, if all to-be-authenticated items corresponding to the authentication level are successfully authenticated in the to-be-authenticated device, the authentication apparatus may determine that the authentication level is successfully authenticated in the to-be-authenticated device; otherwise, the authentication apparatus determines that the authentication level fails to be authenticated in the to-be-authenticated device.

In an example, if to-be-authenticated items in the mapping relationship are grouped into M groups based on a service feature, after obtaining the mapping relationship, and before authenticating each authentication level in the mapping relationship, the authentication apparatus may further first determine, based on a service feature of the to-be-authenticated service executed by the to-be-authenticated device, one or more groups that are not involved in the M groups, and invalidate to-be-authenticated items included in the one or more groups that are in the mapping relationship and that are not involved, so that the authentication apparatus can authenticate only an authentication level that is in the mapping relationship and that is not invalidated. This avoids authenticating a to-be-authenticated item that does not need to be authenticated. In this way, authentication efficiency is effectively improved, and authentication resources are saved.

For example, FIG. 9 is an example of a diagram of service logic of a diagnosis service according to an embodiment of this application. As shown in FIG. 9, the diagnosis service may include a remote diagnosis service and a near-end diagnosis service.

In service logic of the remote diagnosis service, remote diagnosis personnel input a diagnosis instruction on a diagnostic instrument, and the diagnostic instrument forwards the diagnosis instruction to a cloud diagnosis platform through cellular network communication (like a 4G or 5G network). Then, a diagnosis request is sent, on the cloud diagnosis platform, to OBD (for example, a diagnosis agent module) in a vehicle. The OBD controls a corresponding ECU based on the diagnosis request, and receives a control result returned by the ECU. Then the remote diagnosis personnel are notified by using the cloud diagnosis platform and the diagnostic instrument.

In service logic of the local diagnosis service, near-end diagnosis personnel input a diagnosis instruction on a diagnostic instrument, and the diagnostic instrument sends a diagnosis request to OBD in a vehicle. The OBD controls a corresponding ECU based on the diagnosis request, and receives a control result returned by the ECU. Then, the near-end diagnosis personnel are notified by using the diagnostic instrument.

In this way, a service boundary of the diagnosis service may be determined based on the service logic of the diagnosis service. The service boundary includes a physical boundary and a logical boundary. The physical boundary refers to hardware, software, firmware, a document, and the like that are involved in the service logic, and the logical boundary refers to security features of the hardware, the software, the firmware, and the document. For example, in the service logic of the remote diagnosis service, physical boundaries such as a diagnostic instrument, cellular network communication, cloud diagnosis platform, OBD, and an ECU are involved; and logical boundaries such as communication between the diagnostic instrument and the cloud diagnosis platform, communication between the cloud diagnosis platform and the OBD, and intra-vehicle communication are involved. In the service logic of the near-end diagnosis service, physical boundaries such as the diagnostic instrument, OBD, a diagnosis agent module, and an ECU are involved; and logical boundaries such as communication between the diagnostic instrument and the OBD, and intra-vehicle communication are involved.

Further, based on the service boundary of the diagnosis service, a to-be-authenticated item that needs to be authenticated for a current diagnosis service may be selected from all to-be-authenticated items corresponding to the diagnosis service. For example, it is assumed that all the to-be-authenticated items corresponding to the diagnosis service are shown in Table 2. When the current diagnosis service belongs to the remote diagnosis service, because the remote diagnosis service relates to the communication between the diagnostic instrument and the cloud diagnosis platform, the communication between the cloud diagnosis platform and the OBD, and the intra-vehicle communication, integrity and authenticity of the communication between the diagnostic instrument and the cloud diagnosis platform, integrity, authenticity, and confidentiality of the communication between the cloud diagnosis platform and the OBD, and confidentiality of the intra-vehicle communication need to be protected, that is, the to-be-authenticated item that needs to be authenticated includes to-be-authenticated items SR1, SR2, and SR5 to SR11. When the current diagnosis service belongs to the near-end diagnosis service, because the near-end diagnosis service involves the communication between the diagnostic instrument and the OBD and the intra-vehicle communication, integrity, authenticity, and confidentiality of the communication between the diagnostic instrument and the OBD need to be protected, and confidentiality of the intra-vehicle communication needs to be protected, that is, the to-be-authenticated item that needs to be authenticated includes the to-be-authenticated items SR5 to SR11.

In addition, when the to-be-authenticated items corresponding to the diagnosis service are grouped in advance, the to-be-authenticated items corresponding to the current diagnosis service may be obtained by selecting from all the to-be-authenticated items based on the group. For example, it is assumed that all the to-be-authenticated items SR1 to SR11 corresponding to the diagnosis service are divided into three groups shown in Table 4. When the current diagnosis service belongs to the near-end diagnosis service, because the diagnostic instrument cannot be connected to a network, the service logic of the current diagnosis service does not include communication between the diagnostic instrument and a cloud, and therefore, all to-be-authenticated items SR1 to SR4 in the group of the communication between the diagnostic instrument and the cloud do not belong to the to-be-authenticated items that need to be authenticated for the current diagnosis service. In this case, the to-be-authenticated items SR1 to SR4 may be invalidated in the mapping relationship between an authentication level corresponding to the diagnosis service and a to-be-authenticated item shown in Table 3, to obtain an updated mapping relationship shown in Table 5.

Table 5

| Mapping relationship between an authentication level corresponding to the diagnosis service and a to-be-authenticated item | | | | |
|---|---|---|---|---|
| Authentication level 1 | Authentication level 2 | Authentication level 3 | Authentication level 4 | Authentication level 5 |
| SR2 | SR2 | SR2 | SR2 | SR2 |
| SR7 | SR7 | SR7 | SR7 | SR7 |
| SR10 | SR10 | SR10 | SR10 | SR10 |
| | SR1 | SR1 | SR1 | SR1 |
| | SR3 | SR3 | SR3 | SR3 |
| | SR6 | SR6 | SR6 | SR6 |
| | SR9 | SR9 | SR9 | SR9 |
| | | SR4 | SR4 | SR4 |
| | | | SR5 | SR5 |

| Mapping relationship between an authentication level corresponding to the diagnosis service and a to-be-authenticated item | | | | |
|---|---|---|---|---|
| Authentication level 1 | Authentication level 2 | Authentication level 3 | Authentication level 4 | Authentication level 5 |
| | | | SR8 | SR8 |
| | | | | SR11 |

Refer to Table 5. When authenticating each authentication level, the authentication apparatus may authenticate only a to-be-authenticated item that is not invalid at the authentication level. For example, for the authentication level 1, only the SR7 and the SR10 may be authenticated; for the authentication level 2, only the SR7, the SR10, the SR6, and the SR9 may be authenticated; for the authentication level 3, only the SR7, the SR10, the SR6, and the SR9 may be authenticated; for the authentication level 4, only the SR7, the SR10, the SR6, the SR9, the SR5, and the SR8 may be authenticated; and for the authentication level 5, only the SR7, the SR10, the SR6, the SR9, the SR5, the SR8, and the SR11 may be authenticated.

It should be noted that Table 5 indicates an invalid to-be-authenticated item in a gray manner. This is merely a possible example. In another example, the invalid to-be-authenticated item may be indicated in another manner. For example, the invalid to-be-authenticated item may be deleted or hidden in the mapping relationship, or the invalid to-be-authenticated item in the mapping relationship is labeled. This is not specifically limited.

Step 803: The authentication apparatus determines, as an authentication level corresponding to the to-be-authenticated service in the to-be-authenticated device, a highest authentication level in all authentication levels that are successfully authenticated.

In step 803, the authentication apparatus may determine, in a plurality of manners, the authentication level corresponding to the to-be-authenticated service. The following are examples.

In an example, the authentication apparatus may first authenticate all the to-be-authenticated items in the mapping relationship table, to determine, from all the to-be-authenticated items, a to-be-authenticated item that is successfully authenticated. Then, whether each authentication level is successfully authenticated is determined based on the to-be-authenticated item that is successfully authenticated. Specifically, when all to-be-authenticated items corresponding to an authentication level are successfully authenticated, it is determined that the authentication level is successfully authenticated; or if one to-be-authenticated item is not successfully authenticated, it is determined that the authentication level fails to be authenticated. Then the highest authentication level in all the authentication levels that are successfully authenticated are used as the authentication level of the to-be-authenticated service in the to-be-authenticated device. For example, it is assumed that the mapping relationship between an authentication level corresponding to the diagnosis service and a to-be-authenticated item is shown in Table 5. The authentication apparatus may authenticate all the to-be-authenticated items SR7, SR10, SR6, SR9, SR5, SR8, and SR11 that are not invalid in the mapping relationship. Further, if the SR7, the SR10, the SR6, the SR9, the SR5, and the SR11 are successfully authenticated, but the to-be-authenticated item SR8 fails to be authenticated, it may be determined that the authentication levels 1, 2, and 3 are successfully authenticated. In this way, the authentication apparatus may use the highest authentication level 3 in the three authentication levels as the authentication level of the diagnosis service in the to-be-authenticated device.

In another example, considering that each authentication level includes all to-be-authenticated items corresponding to another authentication level lower than the authentication level, the authentication apparatus may further authenticate all the authentication levels in the mapping relationship in ascending order of authentication levels. When any authentication level is authenticated, if all to-be-authenticated items corresponding to the authentication level are successfully authenticated in the to-be-authenticated device, a next authentication level may continue to be authenticated; otherwise, a previous authentication level is determined as the authentication level corresponding to the to-be-authenticated service in the to-be-authenticated device. For example, it is assumed that the mapping relationship between an authentication level corresponding to the diagnosis service and a to-be-authenticated item is shown in Table 5. The authentication apparatus may first authenticate the to-be-authenticated items SR7 and SR10 that are not invalid and that are included in the authentication level 1. If both the to-be-authenticated items SR7 and SR10 are successfully authenticated, the authentication level 2 may continue to be authenticated; otherwise, it is determined that the authentication level corresponding to the to-be-authenticated service is 0. Further, when the authentication level is 2, the authentication apparatus may authenticate only to-be-authenticated items that are included in the authentication level 2 and that are not invalid and are not authenticated, that is, the to-be-authenticated items SR6 and SR9. If both the to-be-authenticated items SR6 and SR9 are successfully authenticated, the authentication level 3 may continue to be authenticated; otherwise, it is determined that the authentication level corresponding to the to-be-authenticated service is 1. In this manner, the authentication apparatus sequentially authenticates the to-be-authenticated items included in all the authentication levels. Once determining that a to-be-authenticated item fails to be authenticated, authentication may end, and there is no need to authenticate another to-be-authenticated item that is not authenticated. In this way, authentication resources can be saved while an authentication result can be determined more quickly.

It should be noted that the foregoing merely provides two possible authentication manners as examples. In an actual operation, the authentication apparatus may alternatively authenticate each authentication level in another manner. For example, in still another example, the authentication apparatus may further estimate, based on a historical authentication status, an authentication level that has a highest probability to correspond to the to-be-authenticated service, then, directly authenticates the authentication level with the highest probability, and authenticates another authentication level when the authentication level fails to be authenticated. There are many possible authentication manners. These are not listed one by one in embodiments of this application.

In this embodiment of this application, for any to-be-authenticated item, certification may specifically include two aspects: assessment and testing. Only when both the assessment and the testing are passed, it indicates that the to-be-authenticated item is successfully authenticated. The assessment means determining, based on a product manual or a specification of the to-be-authenticated device, whether a protective measure is set for a risk corresponding to a to-be-authenticated item in the to-be-authenticated device, and the test is used to verify whether the protective measure for the to-be-authenticated item is effective. Therefore, in an example, when it is assessed that the protective measure is set for the risk corresponding to the to-be-authenticated item in the to-be-authenticated device, the protective measure may continue to be tested; or when it is assessed that no protective measure is set for the risk corresponding to the to-be-authenticated item in the to-be-authenticated device, the testing may not be performed, to save authentication resources.

In an example, a penetration test may be further performed on the to-be-authenticated service, and the to-be-authenticated item is updated based on a result of the penetration test. The penetration test is a supplementary test means, and a specific implementation includes: A certification authority imitates a hacker to attack the to-be-authenticated device, finds a vulnerability existing when the to-be-authenticated device executes the to-be-authenticated service, and then matches the vulnerability with all to-be-authenticated items corresponding to the to-be-authenticated service. If the vulnerability successfully matches with a to-be-authenticated item, the to-be-authenticated item in the mapping relationship corresponding to the to-be-authenticated service may be corrected; otherwise, a new to-be-authenticated item may be generated based on the vulnerability, and added to the mapping relationship corresponding to the to-be-authenticated service.

In the foregoing embodiment of this application, a system architecture and a typical service in each system architecture are abstracted, and a to-be-authenticated item corresponding to each typical service in each architecture is constructed, so that different to-be-authenticated devices belonging to a same system architecture can have a same authentication standard. In this case, service authentication of different to-be-authenticated devices is comparable, and an authentication result determined based on this is more reliable. This resolves a problem that it is difficult to perform unified authentication on different to-be-authenticated devices due to different architectures, functions, and components.

It should be understood that the authentication method provided in this application may be further extended to any information system that has a requirement for security authentication. In addition, with evolution of a system architecture and emergence of a new scenario, the authentication method provided in this application is also applicable to a similar technical problem. This is not specifically limited in this application.

It should be noted that, names of the foregoing information are merely examples. With evolution of communication technologies, the name of any foregoing information may be changed. However, regardless of how the names of the information change, provided that meanings of the information are the same as those of the information in this application, the information falls within the protection scope of this application.

The foregoing mainly describes, from a perspective of interactions between the network elements, the solutions provided in this application. It may be understood that, to implement the foregoing functions, the foregoing network elements include corresponding hardware structures and/or software modules for performing the functions. A person of ordinary skill in the art should easily be aware that, in combination with the examples described in embodiments disclosed in this specification, units, algorithms and steps may be implemented by hardware or a combination of hardware and computer software in the present invention. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of the present invention.

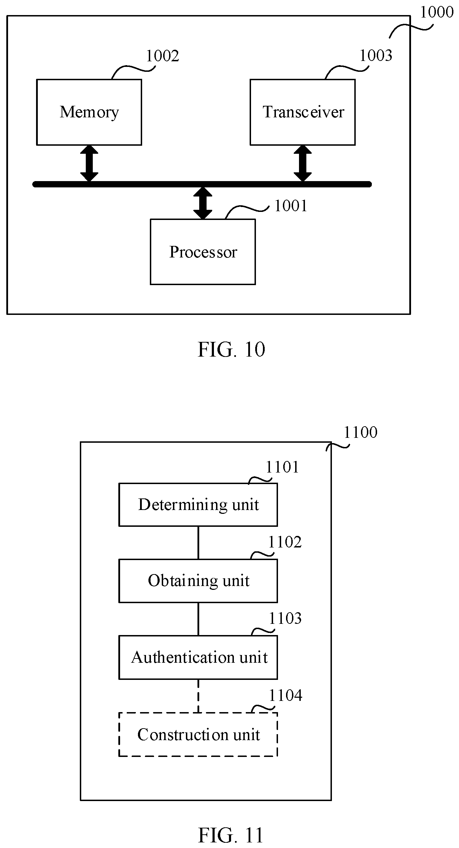

According to the foregoing method, FIG. 10 is a diagram of a structure of an authentication apparatus according to an embodiment of this application. The apparatus may be any device having a processing capability, for example, an authentication server, or may be a chip or a circuit, for example, a chip or a circuit that may be disposed in an authentication server, or an authentication server cluster including a plurality of authentication servers. As shown in FIG. 10, an authentication apparatus 1000 may include a processor 1001, a memory 1002, and a transceiver 1003, and may further include a bus system. The processor 1001, the memory 1002, and the transceiver 1003 may be connected through the bus system.

In an implementation process, steps in the foregoing methods can be implemented by using a hardware integrated logical circuit in the processor 1001, or by using instructions in a form of software. The steps in the methods disclosed with reference to embodiments of this application may be directly performed by a hardware processor, or may be performed by a combination of hardware and a software module in the processor 1001. A software module may be located in a mature storage medium in the art, for example, a random access memory, a flash memory, a read-only memory, a programmable read-only memory, an electrically erasable programmable memory, or a register. The storage medium is located in the memory 1002. The processor 1001 reads information in the memory 1002, and completes the steps of the foregoing method in combination with hardware of the processor 1001.

It should be understood that the processor 1001 may be a chip. The processor 1001 may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), or a programmable logic device (programmable logic device, PLD) or another integrated chip.

It may be understood that the memory 1002 in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

In this embodiment of this application, the memory 1002 is configured to store instructions, and the processor 1001 is configured to execute the instructions stored in the memory 1002, to implement the method corresponding to any one or more of FIG. 2, FIG. 5, or FIG. 8. Specifically, the processor 1001 determines a system architecture to which a to-be-authenticated device belongs, obtains a to-be-authenticated service corresponding to the system architecture, and further invokes the transceiver 1003 to authenticate the to-be-authenticated service of the to-be-authenticated device, to obtain an authentication result of the to-be-authenticated device.

In an optional implementation, the to-be-authenticated device is a vehicle; and the system architecture to which the to-be-authenticated device belongs is one of the following architectures: a distributed electrical/electronic architecture; a cross-domain integrated electrical/electronic architecture; or a central integrated electrical/electronic architecture.

In an optional implementation, the processor 1001 is specifically configured to: if the system architecture corresponds to one to-be-authenticated service, authenticate the to-be-authenticated service in the to-be-authenticated device, to obtain an authentication level corresponding to the to-be-authenticated service, and determine the authentication level corresponding to the to-be-authenticated service as the authentication result of the to-be-authenticated device; or if the system architecture corresponds to a plurality of to-be-authenticated services, separately authenticate the plurality of to-be-authenticated services in the to-be-authenticated device, to obtain authentication levels respectively corresponding to the plurality of to-be-authenticated services, and obtain the authentication result of the to-be-authenticated device based on the plurality of authentication levels corresponding to the plurality of to-be-authenticated services.

In an optional implementation, when the system architecture corresponds to the plurality of to-be-authenticated services, the authentication result of the to-be-authenticated device may be presented as at least one of the following content: a table of a correspondence between the plurality of to-be-authenticated services and the plurality of authentication levels; a diagram of a correspondence between the plurality of to-be-authenticated services and the plurality of authentication levels; or a weighted average value of the plurality of authentication levels corresponding to the plurality of to-be-authenticated services.

In an optional implementation, the processor 1001 is specifically configured to: first, obtain a mapping relationship between an authentication level corresponding to the to-be-authenticated service and a to-be-authenticated item, where in the mapping relationship, each authentication level corresponds to at least one to-be-authenticated item, and a to-be-authenticated item corresponding to any authentication level includes all to-be-authenticated items corresponding to a previous authentication level; and then, authenticate each authentication level in the mapping relationship in the to-be-authenticated device, and determine, as the authentication level corresponding to the to-be-authenticated service in the to-be-authenticated device, a highest authentication level in all authentication levels that are successfully authenticated, where when any authentication level is authenticated, if all to-be-authenticated items corresponding to the authentication level are successfully authenticated in the to-be-authenticated device, it is determined that the authentication level is successfully authenticated in the to-be-authenticated device.

In an optional implementation, the processor 1001 is specifically configured to: authenticate each authentication level in the mapping relationship in the to-be-authenticated device in ascending order of authentication levels, where when any authentication level is authenticated, if all to-be-authenticated items corresponding to the authentication level are successfully authenticated in the to-be-authenticated device, a next authentication level is authenticated; otherwise, a previous authentication level is determined as the authentication level corresponding to the to-be-authenticated service in the to-be-authenticated device.

In an optional implementation, the processor 1001 may further determine the mapping relationship in the following manner: first, determining each risk in the to-be-authenticated service and a risk level of the risk based on service logic of the to-be-authenticated service; then for each risk, defining one to-be-authenticated item, and determining a security level corresponding to the to-be-authenticated item based on the risk level of the risk, where the to-be-authenticated item indicates to overcome the corresponding risk; and finally, defining each authentication level based on a level range including security levels of all to-be-authenticated items, and establishing a mapping relationship between any authentication level and to-be-authenticated items corresponding to all security levels that are not higher than the authentication level.

In an optional implementation, the security level is negatively correlated with the risk level.

In an optional implementation, the to-be-authenticated items in the mapping relationship are grouped into M groups based on a service feature. In this case, before authenticating each authentication level in the mapping relationship in the to-be-authenticated device, the processor 1001 is further configured to: determine, based on a service feature of the to-be-authenticated service executed by the to-be-authenticated device, one or more groups that are in the M groups and that are not involved, and invalidate a to-be-authenticated item included in the one or more groups that are in the mapping relationship and that are not involved.

For concepts, explanations, detailed descriptions, and other steps that are related to the technical solutions of the authentication apparatus provided in this embodiment of this application and that are related to the authentication apparatus 1000, refer to descriptions of the content in the foregoing method or other embodiments. Details are not described herein again.

Based on the foregoing embodiments and a same concept, FIG. 11 is a diagram of another authentication apparatus according to an embodiment of this application. For example, the authentication apparatus 1100 may be the authentication apparatus in any one of the foregoing embodiments, or may be a chip or a circuit, for example, a chip or a circuit that may be disposed in the authentication apparatus. The authentication apparatus 1100 may implement the steps performed by the authentication apparatus in the method corresponding to any one or more of FIG. 2, FIG. 5, or FIG. 8.

As shown in FIG. 11, the authentication apparatus 1000 may include a determining unit 1101, an obtaining unit 1102, and an authentication unit 1103. The determining unit 1101 is configured to determine a system architecture to which a to-be-authenticated device belongs; the obtaining unit 1102 is configured to obtain a to-be-authenticated service corresponding to the system architecture; and the authentication unit 1103 authenticates the to-be-authenticated service of the to-be-authenticated device, to obtain an authentication result of the to-be-authenticated device.

Further, the authentication apparatus 1000 may further include a construction unit 1104. The construction unit 1104 determines each risk in the to-be-authenticated service and a risk level of the risk based on service logic of the to-be-authenticated service; then for each risk, defines one to-be-authenticated item, and determines a security level corresponding to the to-be-authenticated item based on the risk level of the risk; and further, defines each authentication level based on a level range including security levels of all to-be-authenticated items, and establishes a mapping relationship between any authentication level and to-be-authenticated items corresponding to all security levels that are not higher than the authentication level. The to-be-authenticated item indicates to overcome the corresponding risk.

When obtaining information, the obtaining unit 1102 may be a transceiver unit, a transceiver, an input and/or output interface, a pin, or a circuit. When the authentication apparatus 1100 includes a storage unit, the storage unit is configured to store computer instructions. The determining unit 1101, the obtaining unit 1102, the authentication unit 1103, and the construction unit 1104 are separately communicatively connected to the storage unit, and the determining unit 1101, the obtaining unit 1102, the authentication unit 1103, and the construction unit 1104 separately execute the computer instructions stored in the storage unit, so that the authentication apparatus 1100 may be configured to perform the method performed by the authentication apparatus in any one of the foregoing embodiments. The determining unit 1101, the obtaining unit 1102, the authentication unit 1103, and the construction unit 1104 may be a general-purpose central processing unit (CPU), a microprocessor, or an application-specific integrated circuit (application-specific integrated circuit, ASIC). Optionally, the storage unit is a storage unit in the chip, for example, a register or a cache; or the storage unit may be a storage unit that is in the authentication apparatus 1100 and that is located outside the chip, for example, a read-only memory (read-only memory, ROM), another type of static storage device that can store static information and instructions, or a random access memory (random access memory, RAM).

For concepts, explanations, detailed descriptions, and other steps that are related to the technical solutions provided in this embodiment of this application and that are related to the authentication apparatus 1100, refer to descriptions of the content in the foregoing method or other embodiments. Details are not described herein again.

It should be understood that division into the units of the authentication apparatus 1100 is merely logical function division. During actual implementation, all or some of the units may be integrated into one physical entity, or may be physically separated. In this embodiment of this application, the determining unit 1101, the obtaining unit 1102, the authentication unit 1103, and the construction unit 1104 may be implemented by the processor 1001 in FIG. 10.

According to the authentication method provided in embodiments of this application, this application further provides a chip. The chip may include a processor and an interface. The processor is configured to read instructions through the interface, to implement the method performed by the authentication apparatus in the foregoing content.

According to the authentication method provided in embodiments of this application, this application further provides an authentication system. The authentication system may include the authentication apparatus and the to-be-authenticated device described above.

According to the authentication method provided in embodiments of this application, this application further provides a computer-readable storage medium. The computer-readable storage medium stores a computer program. When the computer program is run, the method performed by the authentication apparatus in the foregoing content is implemented.

According to the authentication method provided in embodiments of this application, this application further provides a computer program product. When the computer program product runs on a processor, the method performed by the authentication apparatus in the foregoing content is implemented.

Terminologies such as "component", "unit", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network like the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and there may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An authentication method, comprising:

   determining a system architecture to which a to-be-authenticated device belongs;
   obtaining a to-be-authenticated service corresponding to the system architecture; and
   authenticating the to-be-authenticated service of the to-be-authenticated device, to obtain an authentication result of the to-be-authenticated device.

2. The method according to claim 1, wherein

the to-be-authenticated device is a vehicle; and
the system architecture is one of the following architectures:

a distributed electrical/electronic architecture;
a cross-domain integrated electrical/electronic architecture; or
a central integrated electrical/electronic architecture.

3. The method according to claim 1 or 2, wherein authenticating the to-be-authenticated service of the to-be-authenticated device, to obtain the authentication result of the to-be-authenticated device comprises:

if the system architecture corresponds to one to-be-authenticated service, authenticating the to-be-authenticated service in the to-be-authenticated device, to obtain an authentication level corresponding to the to-be-authenticated service, and determining the authentication level corresponding to the to-be-authenticated service as the authentication result of the to-be-authenticated device; or
if the system architecture corresponds to a plurality of to-be-authenticated services, separately authenticating the plurality of to-be-authenticated services in the to-be-authenticated device, to obtain authentication levels respectively corresponding to the plurality of to-be-authenticated services, and obtaining the authentication result of the to-be-authenticated device based on the plurality of authentication levels corresponding to the plurality of to-be-authenticated services.

4. The method according to claim 3, wherein when the system architecture corresponds to the plurality of to-be-authenticated services, the authentication result of the to-be-authenticated device is presented as at least one of the following:

a table of a correspondence between the plurality of to-be-authenticated services and the plurality of authentication levels;
a diagram of a correspondence between the plurality of to-be-authenticated services and the plurality of authentication levels;
or
a weighted average value of the plurality of authentication levels corresponding to the plurality of to-be-authenticated services.

5. The method according to any one of claims 1 to 4, wherein authenticating the to-be-authenticated service of the to-be-authenticated device, to obtain the authentication result of the to-be-authenticated device comprises:

obtaining a mapping relationship between an authentication level corresponding to the to-be-authenticated service and a to-be-authenticated item, wherein in the mapping relationship, each authentication level corresponds to at least one to-be-authenticated item, and a to-be-authenticated item corresponding to any authentication level comprises all to-be-authenticated items corresponding to a previous authentication level; and
authenticating each authentication level in the mapping relationship in the to-be-authenticated device, and determining, as the authentication level corresponding to the to-be-authenticated service in the to-be-authenticated device, a highest authentication level in all authentication levels that are successfully authenticated, wherein when any authentication level is authenticated, if all to-be-authenticated items corresponding to the authentication level are successfully authenticated in the to-be-authenticated device, it is determined that the authentication level is successfully authenticated in the to-be-authenticated device.

6. The method according to claim 5, wherein authenticating each authentication level in the mapping relationship in the to-be-authenticated device, and determining, as the authentication level corresponding to the to-be-authenticated service in the to-be-authenticated device, the highest authentication level in all the authentication levels that are successfully authenticated comprises:
authenticating each authentication level in the mapping relationship in the to-be-authenticated device in ascending order of authentication levels, wherein when any authentication level is authenticated, if all to-be-authenticated items corresponding to the authentication level are successfully authenticated in the to-be-authenticated device, a next authentication level is authenticated; otherwise, a previous authentication level is determined as the authentication level corresponding to the to-be-authenticated service in the to-be-authenticated device.

7.  The method according to claim 5 or 6, wherein the mapping relationship is determined in the following manner:

    determining each risk in the to-be-authenticated service and a risk level of the risk based on service logic of the to-be-authenticated service;
    for each risk, defining one to-be-authenticated item, and determining a security level corresponding to the to-be-authenticated item based on the risk level of the risk, wherein the to-be-authenticated item indicates to overcome the corresponding risk; and
    defining each authentication level based on a level range comprising security levels of all to-be-authenticated items, and establishing a mapping relationship between any authentication level and to-be-authenticated items corresponding to all security levels that are not higher than the authentication level.

8.  The method according to claim 7, wherein the security level is negatively correlated with the risk level.

9.  The method according to any one of claims 5 to 8, wherein

    the to-be-authenticated items in the mapping relationship are grouped into M groups based on a service feature; and
    before authenticating each authentication level in the mapping relationship in the to-be-authenticated device, the method further comprises:
    determining, based on a service feature of the to-be-authenticated service executed by the to-be-authenticated device, one or more groups that are in the M groups and that are not involved, and invalidating a to-be-authenticated item comprised in the one or more groups that are in the mapping relationship and that are not involved.

10. An authentication apparatus, wherein the apparatus comprises:

    a determining unit, configured to determine a system architecture to which a to-be-authenticated device belongs;
    an obtaining unit, configured to obtain a to-be-authenticated service corresponding to the system architecture; and
    an authentication unit, configured to authenticate the to-be-authenticated service of the to-be-authenticated device, to obtain an authentication result of the to-be-authenticated device.

11. The apparatus according to claim 10, wherein

    the to-be-authenticated device is a vehicle; and
    the system architecture is one of the following architectures:

        a distributed electrical/electronic architecture;
        a cross-domain integrated electrical/electronic architecture; or
        a central integrated electrical/electronic architecture.

12. The apparatus according to claim 10 or 11, wherein the authentication unit is specifically configured to:

    if the system architecture corresponds to one to-be-authenticated service, authenticate the to-be-authenticated service in the to-be-authenticated device, to obtain an authentication level corresponding to the to-be-authenticated service, and determine the authentication level corresponding to the to-be-authenticated service as the authentication result of the to-be-authenticated device; or
    if the system architecture corresponds to a plurality of to-be-authenticated services, separately authenticate the plurality of to-be-authenticated services in the to-be-authenticated device, to obtain authentication levels respectively corresponding to the plurality of to-be-authenticated services, and obtain the authentication result of the to-be-authenticated device based on the plurality of authentication levels corresponding to the plurality of to-be-authenticated services.

13. The apparatus according to claim 12, wherein when the system architecture corresponds to the plurality of to-be-authenticated services, the authentication result of the to-be-authenticated device is presented as at least one of the following:

a table of a correspondence between the plurality of to-be-authenticated services and the plurality of authentication levels;

a diagram of a correspondence between the plurality of to-be-authenticated services and the plurality of authentication levels; or

a weighted average value of the plurality of authentication levels corresponding to the plurality of to-be-authenticated services.

14. The apparatus according to any one of claims 10 to 13, wherein the authentication unit is specifically configured to:

obtain a mapping relationship between an authentication level corresponding to the to-be-authenticated service and a to-be-authenticated item, wherein in the mapping relationship, each authentication level corresponds to at least one to-be-authenticated item, and a to-be-authenticated item corresponding to any authentication level comprises all to-be-authenticated items corresponding to a previous authentication level; and

authenticate each authentication level in the mapping relationship in the to-be-authenticated device, and determine, as the authentication level corresponding to the to-be-authenticated service in the to-be-authenticated device, a highest authentication level in all authentication levels that are successfully authenticated, wherein when any authentication level is authenticated, if all to-be-authenticated items corresponding to the authentication level are successfully authenticated in the to-be-authenticated device, it is determined that the authentication level is successfully authenticated in the to-be-authenticated device.

15. The apparatus according to claim 14, wherein the authentication unit is specifically configured to:
authenticate each authentication level in the mapping relationship in the to-be-authenticated device in ascending order of authentication levels, wherein when any authentication level is authenticated, if all to-be-authenticated items corresponding to the authentication level are successfully authenticated in the to-be-authenticated device, a next authentication level is authenticated; otherwise, a previous authentication level is determined as the authentication level corresponding to the to-be-authenticated service in the to-be-authenticated device.

16. The apparatus according to claim 14 or 15, further comprising a construction unit, wherein the construction unit is configured to:

determine each risk in the to-be-authenticated service and a risk level of the risk based on service logic of the to-be-authenticated service;

for each risk, define one to-be-authenticated item, and determine a security level corresponding to the to-be-authenticated item based on the risk level of the risk, wherein the to-be-authenticated item indicates to overcome the corresponding risk; and

define each authentication level based on a level range comprising security levels of all to-be-authenticated items, and establish a mapping relationship between any authentication level and to-be-authenticated items corresponding to all security levels that are not higher than the authentication level.

17. The apparatus according to claim 16, wherein the security level is negatively correlated with the risk level.

18. The apparatus according to any one of claims 14 to 17, wherein

the to-be-authenticated items in the mapping relationship are grouped into M groups based on a service feature; and

before authenticating each authentication level in the mapping relationship in the to-be-authenticated device, the authentication unit is further configured to:

determine, based on a service feature of the to-be-authenticated service executed by the to-be-authenticated device, one or more groups that are in the M groups and that are not involved, and invalidate a to-be-authenticated item comprised in the one or more groups that are in the mapping relationship and that are not involved.

19. An authentication apparatus, comprising a processor and a memory, wherein the memory stores computer program instructions, and the processor runs the computer program instructions to implement the method according to any one of claims 1 to 9.

20. A computer-readable storage medium, wherein the computer-readable storage medium stores a computer program, and when the computer program is run, the method according to any one of claims 1 to 9 is implemented.

**21.** A computer program product, wherein when the computer program product runs on a processor, the method according to any one of claims 1 to 9 is implemented.

FIG. 1

FIG. 2

Vehicle-centralized
electrical/electronic
architecture
Vehicle-
Centralized EEA

Vehicle cloud computing

Vehicle-mounted
computer computing

Domain-centralized
electrical/electronic
architecture
Domain-centralized
EEA

Cross-domain convergence

Domain controller

Domain integration

Distributed
electrical/electronic
architecture
Distributed EEA

Function integration

ECU

Function modularization

FIG. 3

Digital key          Remote control

FIG. 4

501

Determine each risk in a to-be-authenticated service and a risk level of the risk based on service logic of the to-be-authenticated service

502

Define one to-be-authenticated item for each risk, and determine a security level corresponding to the to-be-authenticated item based on the risk level of the risk, where the to-be-authenticated item indicates to overcome the corresponding risk

503

Define each authentication level based on a level range including security levels of all to-be-authenticated items, and establish a mapping relationship between any authentication level and to-be-authenticated items corresponding to all security levels that are not higher than the authentication level

FIG. 5

| Service | Function | Asset | Is life safety affected? | Is a property affected? | Is a function available? | Is privacy violated? | Impact level | Risk and attack means | Attack duration | Professional skill | Service knowledge | Attack opportunity/ window | Attack equipment | Difficulty level | Risk level |
|---|---|---|---|---|---|---|---|---|---|---|---|---|---|---|---|
| Diagnosis service | Communication between a diagnostic instrument and a cloud | Diagnosis communication between the diagnostic instrument and a cloud diagnosis platform | No | Yes | Yes | Yes | High | Integrity of the communication between the diagnostic instrument and the cloud diagnosis platform is attacked: Step 1: An attacker forges a diagnosis instruction; Step 2: Deliver the diagnosis instruction to an ECU; and Step 3: The ECU performs a corresponding action, causing incorrect diagnosis. | 1 | 3 | 7 | 0 | 0 | High | High |
| | | | Yes | Yes | Yes | Yes | Serious | Authenticity of the communication between the diagnostic instrument and the cloud diagnosis platform is attacked: Step 1: An attacker pretends to be a diagnosis server; Step 2: Use a DoS to attack, and send a large number of diagnosis instructions to an ECU; and Step 3: The ECU performs diagnosis, causing resource exhaustion. | 0 | 0 | 3 | 0 | 7 | High | Very high |
| | | Authorized communication between the diagnostic instrument and a cloud management platform | No | Yes | Yes | Yes | High | Integrity of the communication between the diagnostic instrument and the cloud management platform is attacked: Step 1: An attacker accesses the diagnostic instrument to communicate with the cloud; Step 2: The attacker forges or tampers with an authorization file; and Step 3: Deliver the authorization file to the diagnostic instrument. | 1 | 3 | 0 | 0 | 7 | High | High |
| | | | No | Yes | No | No | Moderate | Authenticity of the communication between the diagnostic instrument and the cloud management platform is attacked: Step 1: An attacker accesses the diagnostic instrument to communicate with the cloud; Step 2: The attacker pretends to be the cloud management platform; and Step 3: Do not respond to a command about an authorization file requirement | 0 | 3 | 3 | 0 | 7 | High | Moderate |
| | Communication between a diagnostic instrument and OBD | Diagnosis communication between the diagnostic instrument and a CAN bus of an OBD interface | No | No | No | No | Negligible | Confidentiality of the communication between the diagnostic instrument and the CAN bus of the OBD interface is attacked. Step 1: An attacker eavesdrops on the CAN diagnosis communication through the OBD interface; and Step 2: Steal sensitive information from the communication. | 0 | 0 | 0 | 1 | 4 | High | Low |
| | | | No | Yes | Yes | Yes | High | Integrity of the communication between the diagnostic instrument and the CAN bus of the OBD interface is attacked: Step 1: An attacker forges a diagnosis instruction; Step 2: Deliver the diagnosis instruction to an ECU; and Step 3: The ECU performs a corresponding action, causing incorrect diagnosis. | 1 | 3 | 7 | 1 | 4 | High | High |
| | | | Yes | Yes | Yes | Yes | Serious | Authenticity of the communication between the diagnostic instrument and the CAN bus of the OBD interface is attacked: Step 1: An attacker pretends to be an authorized diagnostic instrument; Step 2: Use a DoS to attack, and send a large number of diagnosis instructions to an ECU; and Step 3: The ECU performs diagnosis, causing resource exhaustion. | 0 | 0 | 3 | 1 | 7 | High | Very high |
| | | Diagnosis communication between the diagnostic instrument and an Ethernet bus of an OBD interface | No | No | No | No | Negligible | Confidentiality of the communication between the diagnostic instrument and the Ethernet bus of the OBD interface is attacked: Step 1: An attacker eavesdrops on the Ethernet diagnosis communication through the OBD interface; and Step 2: Steal sensitive information from the communication. | 0 | 0 | 0 | 1 | 4 | High | Low |
| | | | No | Yes | Yes | Yes | High | Integrity of the communication between the diagnostic instrument and the Ethernet bus of the OBD interface is attacked: Step 1: An attacker forges a diagnosis instruction; Step 2: Deliver the diagnosis instruction to an ECU; and Step 3: The ECU performs a corresponding action, causing incorrect diagnosis. | 1 | 1 | 7 | 1 | 4 | High | High |
| | | | Yes | Yes | Yes | Yes | Serious | Authenticity of the communication between the diagnostic instrument and the Ethernet bus of the OBD interface is attacked: Step 1: An attacker pretends to be an authorized diagnostic instrument; Step 2: Use a DoS to attack, and send a large number of diagnosis instructions to an ECU; and Step 3: The ECU performs diagnosis, causing resource exhaustion. | 0 | 0 | 3 | 1 | 7 | High | Very high |
| | Intra-vehicle communication | Diagnosis communication between in-vehicle CAN buses | No | No | No | No | Negligible | Confidentiality of the communication between the in-vehicle CAN buses is attacked: Step 1: An attacker eavesdrops on the CAN diagnosis communication in a vehicle; and Step 2: Steal sensitive information from the communication. | 0 | 6 | 7 | 0 | 4 | High | Very low |

FIG. 6

| Service | Function | Asset | Attack means | Risk level | To-be-authenticated item | Definition of a to-be-authenticated item | Risk level |
|---|---|---|---|---|---|---|---|
| Diagnosis service | Communication between a diagnostic instrument and a cloud | Diagnosis communication between the diagnostic instrument and a cloud diagnosis platform | Step 1: An attacker forges a diagnosis instruction; Step 2: Deliver the diagnosis instruction to an ECU; and Step 3: The ECU performs a corresponding action, causing incorrect diagnosis. | High | SR1 | Perform integrity protection on the communication between the diagnostic instrument and the cloud diagnosis platform | 2 |
| | | | Step 1: An attacker pretends to be a diagnosis server; Step 2: Use a DoS to attack, and send a large number of diagnosis instructions to an ECU; and Step 3: The ECU performs diagnosis, causing resource exhaustion. | Very high | SR2 | Authenticate the diagnosis instrument and the cloud diagnosis platform, and perform authenticity protection on the communication | 1 |
| | | Authorized communication between the diagnostic instrument and a cloud management platform | Step 1: An attacker accesses the diagnostic instrument to communicate with the cloud; Step 2: The attacker forges or tampers with an authorization file; and Step 3: Deliver the authorization file to the diagnostic instrument. | High | SR3 | Perform integrity protection on the communication between the diagnostic instrument and the cloud management platform | 2 |
| | | | Step 1: An attacker accesses the diagnostic instrument to communicate with the cloud; Step 2: The attacker pretends to be the cloud management platform; and Step 3: Do not respond to a command about an authorization file requirement | Moderate | SR4 | Authenticate the diagnostic instrument and the cloud management platform, and perform authenticity protection on the communication | 3 |
| | Communication between a diagnostic instrument and OBD | Diagnosis communication between the diagnostic instrument and a CAN bus of an OBD interface | Step 1: An attacker eavesdrops on the CAN diagnosis communication through the OBD interface; and Step 2: Steal sensitive information from the communication. | Low | SR5 | Perform confidentiality protection on the communication between the diagnostic instrument and the CAN bus of the OBD interface | 4 |
| | | | Step 1: An attacker forges a diagnosis instruction; Step 2: Deliver the diagnosis instruction to an ECU; and Step 3: The ECU performs a corresponding action, causing incorrect diagnosis. | High | SR6 | Perform integrity protection on the communication between the diagnostic instrument and the CAN bus of the OBD interface | 2 |
| | | | Step 1: An attacker pretends to be an authorized diagnostic instrument; Step 2: Use a DoS to attack, and send a large number of diagnosis instructions to an ECU; and Step 3: The ECU performs diagnosis, causing resource exhaustion. | Very high | SR7 | Perform authenticity protection on the communication between the diagnostic instrument and the CAN bus of the OBD interface | 1 |
| | | Diagnosis communication between the diagnostic instrument and an Ethernet bus of an OBD interface | Step 1: An attacker eavesdrops on the Ethernet diagnosis communication through the OBD interface; and Step 2: Steal sensitive information from the communication. | Low | SR8 | Perform confidentiality protection on the communication between the diagnostic instrument and the Ethernet bus of the OBD interface | 4 |
| | | | Step 1: An attacker forges a diagnosis instruction; Step 2: Deliver the diagnosis instruction to an ECU; and Step 3: The ECU performs a corresponding action, causing incorrect diagnosis. | High | SR9 | Perform integrity protection on the communication between the diagnostic instrument and the Ethernet bus of the OBD interface | 2 |
| | | | Step 1: An attacker pretends to be an authorized diagnostic instrument; Step 2: Use a DoS to attack, and send a large number of diagnosis instructions to an ECU; and Step 3: The ECU performs diagnosis, causing resource exhaustion. | Very high | SR10 | Perform authenticity protection on the communication between the diagnostic instrument and the Ethernet bus of the OBD interface | 1 |
| | Intra-vehicle communication | Diagnosis communication between in-vehicle CAN buses | Step 1: An attacker eavesdrops on the CAN diagnosis communication in a vehicle; and Step 2: Steal sensitive information from the communication. | Very low | SR11 | Encrypt a CAN message | 5 |

FIG. 7

801

Obtain a mapping relationship between an authentication level corresponding to a to-be-authenticated service and a to-be-authenticated item

802

Authenticate each authentication level in the mapping relationship in a to-be-authenticated device

803

Determine, as an authentication level corresponding to the to-be-authenticated service in the to-be-authenticated device, a highest authentication level in all authentication levels that are successfully authenticated

FIG. 8

Remote diagnosis personnel | Diagnostic instrument | Diagnosis platform

Vehicle

OBD        ECU

Near-end diagnosis personnel | Diagnostic instrument

FIG. 9

FIG. 10

FIG. 11

## INTERNATIONAL SEARCH REPORT

| International application No. |
|---|
| **PCT/CN2022/139250** |

| A. | CLASSIFICATION OF SUBJECT MATTER |
|---|---|
| | H04L9/32(2006.01)i |

According to International Patent Classification (IPC) or to both national classification and IPC

| B. | FIELDS SEARCHED |
|---|---|

Minimum documentation searched (classification system followed by classification symbols)

IPC:H04L H04W G06F

Documentation searched other than minimum documentation to the extent that such documents are included in the fields searched

Electronic data base consulted during the international search (name of data base and, where practicable, search terms used)

CNTXT, ENTXT, CNKI, IEEE: 车, 架构, 认证, 系统, 业务, 等级, 映射, level, EEA, distributed, authentication, centralized, mapping

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2022111820 A1 (FORD GLOBAL TECHNOLOGIES, LLC) 14 April 2022 (2022-04-14) description, paragraphs 20-70 | 1-21 |
| A | CN 113015161 A (HUAWEI TECHNOLOGIES CO., LTD.) 22 June 2021 (2021-06-22) entire document | 1-21 |
| A | CN 113542265 A (SHENZHEN SOUTHERN DARE AUTOMOTIVE ELECTRONICS CO., LTD.) 22 October 2021 (2021-10-22) entire document | 1-21 |
| A | CN 114257388 A (BEIJING ELECTRIC VEHICLE CO., LTD.) 29 March 2022 (2022-03-29) entire document | 1-21 |
| A | CN 115203666 A (TENCENT TECHNOLOGY (SHENZHEN) CO., LTD.) 18 October 2022 (2022-10-18) entire document | 1-21 |
| A | WO 2022127510 A1 (HUAWEI TECHNOLOGIES CO., LTD.) 23 June 2022 (2022-06-23) entire document | 1-21 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 June 2023** | **21 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/139250**

| C. | DOCUMENTS CONSIDERED TO BE RELEVANT | |
|---|---|---|
| Category* | Citation of document, with indication, where appropriate, of the relevant passages | Relevant to claim No. |
| A | US 2021334353 A1 (HUAWEI TECHNOLOGIES CO., LTD.) 28 October 2021 (2021-10-28) entire document | 1-21 |

Form PCT/ISA/210 (second sheet) (July 2022)

**INTERNATIONAL SEARCH REPORT**
**Information on patent family members**

International application No.

**PCT/CN2022/139250**

| Patent document cited in search report | | | Publication date (day/month/year) | Patent family member(s) | | | Publication date (day/month/year) |
|---|---|---|---|---|---|---|---|
| US | 2022111820 | A1 | 14 April 2022 | DE | 102021126319 | A1 | 14 April 2022 |
| | | | | CN | 114449525 | A | 06 May 2022 |
| CN | 113015161 | A | 22 June 2021 | WO | 2021121273 | A1 | 24 June 2021 |
| | | | | US | 2023029683 | A1 | 02 February 2023 |
| | | | | EP | 4063203 | A1 | 28 September 2022 |
| CN | 113542265 | A | 22 October 2021 | None | | | |
| CN | 114257388 | A | 29 March 2022 | None | | | |
| CN | 115203666 | A | 18 October 2022 | None | | | |
| WO | 2022127510 | A1 | 23 June 2022 | CN | 114647836 | A | 21 June 2022 |
| US | 2021334353 | A1 | 28 October 2021 | KR | 20210097797 | A | 09 August 2021 |
| | | | | EP | 3923613 | A1 | 15 December 2021 |
| | | | | JP | 2022531815 | A | 12 July 2022 |
| | | | | WO | 2021051852 | A1 | 25 March 2021 |
| | | | | MX | 2021009397 | A | 10 September 2021 |
| | | | | CN | 112533195 | A | 19 March 2021 |

Form PCT/ISA/210 (patent family annex) (July 2022)